# EUROPEAN PATENT SPECIFICATION

(11) **EP 2 959 716 B1**
(45) Date of publication and mention of the grant of the patent: **05.10.2016**
(21) Application number: 13706501.7
(22) Date of filing: 22.02.2013
(51) Int. Cl.: H04W 28/02, H04L 29/06, H04W 52/02, H04L 12/825, H04W 4/20

(54) **MEDIA DISTRIBUTION NETWORK SYSTEM WITH MEDIA BURST TRANSMISSION VIA AN ACCESS NETWORK**
MEDIENVERTEILUNGSNETZWERKSYSTEM MIT MEDIEN-BURST-ÜBERTRAGUNG ÜBER EIN ZUGANGSNETZWERK
SYSTÈME DE RÉSEAU DE DISTRIBUTION MULTIMÉDIA À TRANSMISSION DE SALVES DE DONNÉES MULTIMÉDIAS PAR LE BIAIS D'UN RÉSEAU D'ACCÈS

(43) Date of publication of application: 30.12.2015
(73) Proprietor: Telefonaktiebolaget LM Ericsson (publ), 164 83 Stockholm (SE)
(72) Inventor: SKOG, Robert, S-165 76 Haesselby (SE); ERIKSSON, Ann-Christine, S-749 51 Grillby (SE); LOHMAR, Thorsten, 52074 Aachen (DE); MATUTE ARRIBAS, Victoria, 52064 Aachen (DE); SINTORN, Mathias, S-191 41 Sollentuna (SE)
(74) Representative: Ericsson
(86) International application number: PCT/EP2013/053621
(87) International publication number: WO 2014/127834

(56) References cited:
- EP-A1- 2 472 946
- US-A1- 2012 069 829
- ERICSSON ET AL: "Impact of video streaming traffic on LTE", 3GPP DRAFT; R2-114313 IMPACT OF VIDEO STREAMING TRAFFIC ON LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050540044, [retrieved on 2011-08-16]
- INTEL CORPORATION (UK) LTD: "Justification for MPD-Awareness in QoS Support for DASH", 3GPP DRAFT; S4-111008_PCC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Jeju, Korea; 20111107 - 20111111, 7 November 2011 (2011-11-07), XP050577925, [retrieved on 2011-11-07]

## Description

### Technical Field

The present disclosure relates to aspects of a media distribution network system in which media data are transmitted via an access network in media bursts to a media client. A media burst is followed by an idle period in which no media data are transmitted.

### Background

Conventional media distribution networks comprise one or multiple media clients connected via a wired or wireless communication network to a media server. With the recent bandwidth increases of such communication networks, also the volume of consumed media data has grown substantially, and new media applications have evolved. Such media applications include video-on-demand, live streaming, and so on.

Various approaches have been proposed to efficiently make use of the bandwidth capabilities of modern communication networks for media data distribution. One such approach described in US 2012/0069829 A1 is the transmission of a media file in individual media bursts over a broadband channel. The adoption of a bursty transmission scheme becomes possible since the channel bandwidth is typically greater than the bandwidth actually required for live consumption of the media data (e.g., in a streaming scenario).

In the transmission scheme suggested in US 2012/0069829 A1, each media burst is followed by a pause. The pause constitutes an idle period in which no media data are transmitted. The aggregated durations of each media burst and the idle period that follows define a so-called window period. The duration of the window period is in a range from 100 ms to 1000 ms. The idle period is 50% or less of the window period. During the idle period, the broadband channel may be released, and a waste of transmission resources can thus be avoided.

Burst generation and burst transmission are performed under control of a dedicated gateway function. The gateway function is in one variant incorporated into a media server. In another variant, the gateway function is installed on a dedicated proxy node between the media server and the media clients.

According to US 2012/0069829 A1, the gateway function is located in a core or service network and configured to communicate via a radio access network with the media clients. The radio access network comprises a wireless base station configured to establish dedicated wireless communication links to the media clients.

Document EP 2 472 946 A1 represents further related prior art.

### Summary

There is a need for a technique that permits an efficient implementation of a transmission scheme for a media distribution network in which media data are transmitted via an access network in media bursts to a media client.

According to one aspect, there is provided a method of operating a network node in a media distribution network in which media data are transmitted via an access network in media bursts to a media client, wherein a media burst is followed by an idle period in which no media data are transmitted. The method comprises receiving, from the access network, a control message, and adjusting, responsive to the control message, at least one of a media data volume of a media burst and a duration of an idle period following the media burst.

The control message may be indicative of a load status of the access network or any other access network-related parameter. The load status may be indicated in various forms, for example in the form of a flag that is set when the load status is high or low, in the form of a load figure (e.g., a percentage value relative to a maximum load of 100 %), and so on.

According to one example, the control message is indicative of a load status that requires a decrease of access network load (e.g., compared to a current load status of the access network). One or more operations may be initiated to decrease access network load. Such operations may comprise increasing the media data volume of the media burst (e.g., increasing a target media data volume for a burst from a current value to a higher value) and/or extending the duration of the idle period (e.g., by raising a target value for the idle period duration).

Generally, when the control message is indicative of a load status that requires a decrease of access network load, the number of idle periods may be decreased. As an example, when a decrease of access network load is required, less idle periods to transmit a given amount of media data may be scheduled compared to a more relaxed load status.

The control message may also be indicative of a load status that permits an increase of access network load. Also in such a case, one or more operations may be initiated, including decreasing the media data volume of the media bursts (e.g., reducing a target media data volume for a burst) and/or shortening the duration of the idle period (e.g., compared to a target idle period duration).

When the control message is indicative of a load status that permits an increase of access network load: the number of idle periods may be increased. Moreover, the adjustment with respect to the media data volume of the media burst and/or the duration of an idle period following the media burst may be performed to permit a decrease of a power consumption of the media client.

The idle period duration may be selected to permit the media client to initiate one or more power saving measures. As an example, the idle period duration may be adjusted to permit the media client to transit from a first state of power consumption into a second state of power consumption during the idle period. The first state is associated with a higher power consumption than the second state. The first state and the second state may belong to a set of two or more radio channel states such as states of a Radio Resource Control (RRC) protocol implemented by the media client.

The idle period duration may generally be selected dependent on access network and/or media client settings. As an example, the idle period duration may be selected dependent on (e.g., to be longer than) one or more inactivity timer settings at the media client. The inactivity timer setting may control a transition of the media client between different power consumption states. In one realization, the settings of RRC inactivity timers may be taken into account when selecting the first duration.

In one implementation, the access network node may be informed of the duration of an upcoming idle period. To this end, an information message may be generated and sent to the access network node. The information messages may be sent every time the idle period duration is changed, or in predetermined intervals.

In one implementation, the media burst comprises multiple individual media data transports to the media client. Each media data transport may comprise an individual media data segment.The aggregated sizes of the media data transports transported during an individual media burst may define the media data volume of that media burst.

According to one example, each media data transport conveys an individual transport layer data segment. If, as an example, the Transmission Control Protocol (TCP) is used on the transport layer, a media burst may comprise multiple TCP segments. The multiple TCP segments of a media burst may be transmitted via a single TCP connection from the network node to the media client.

The media data volume of the media burst may be adjusted by terminating the media data transports dependent on a fill level of the media client buffer. A target media data volume (e.g., with respect to a remaining playout time of the buffered media data) may be defined based on that fill level. Once the aggregated media data volume transmitted in previous media data transports equals or exceeds the target media data volume, the media data transports for the burst (and thus the burst) may be terminated. During the media burst, the fill level of the media client buffer may once or repeatedly be determined. As an example, such a determination may occur after each individual media data transport or after multiple (e.g., a predefined number) of media data transports have occurred.

The media data transports may individually be acknowledged by the media client. Accordingly, the network node may receive an acknowledgement of receipt of an individual media data transport. As understood herein, the acknowledgement may be positive (meaning that the media client acknowledges successful receipt of a media data transport) or negative (meaning that the media client informs the network node that a media data transport has not been received).

At the end of the media burst (e.g., in response to acknowledgement of receipt of the last media data transport within a burst), an idleness timer may be started to define the idle period. After expiry of the idleness timer, the next media burst may be generated for transmission. The idleness timer, and thus the duration of the idle period, may be set to a value that is constant or variable (e.g., during a specific media data distribution session such as a media file download).

The aggregated durations of the media burst and the idle period that follows the media burst may define a time window. In one variant, successive time windows have variable durations. As said, the media data volume of each media burst may be adjusted dependent on the fill level of the media client buffer. Due to the control message signalling and, optionally, fill level variations, successive media bursts may thus have variable media data volumes. Consequently, the variable durations of the time windows may depend at least partially on the variable media data volumes that need to be transported therein.

The media burst may be transmitted at a first bitrate, and the media client buffer may be drained at a second bitrate. The first bitrate may at least on the average be higher than the second bitrate. As an example, the first bitrate may exceed the second bitrate by a factor of 2, 3 or higher. In one variant, the first bitrate may be determined by a bitrate available for (e.g., allocated to) a communication link terminating at the media client. The communication link may start at an access network node via which the media client is attached to a network comprising a network node providing the media data.

The adjustment of the media data volume, the idle period duration or both may take into account one or more constraints. The following examples may be combined as needed.

The media data volume may be adjusted dependent on the first bitrate at which the media burst is transmitted or the second bitrate at which the media client buffer is drained. In one implementation, the adjustment of the media data volume takes into account both the first bitrate and the second bitrate (e.g., a ratio between the first bitrate and the second bitrate).

The method may further comprise determining a fill level of a media buffer of the media client. In such a case, the media data volume of the media burst and/or the idle period duration may be adjusted dependent on that fill level. Determining the fill level may comprise estimating the fill level of the media client buffer based on a buffering model. The buffering model may take into account a volume of transmitted media data on the one hand and a buffer draining rate at the media client on the other. As an example, the network node may keep track of the volume of media data transmitted in previous bursts. The buffer draining rate at the media client may be estimated by the network node or signalled to the network node.

The media data volume may be adjusted so that there will be no media client buffer underrun during the idle period following the media burst. To this end, the media data volume may be adjusted taking into account at least one of the following parameters: the current fill level of the media client buffer, the second bitrate at which the media client buffer is drained and a scheduled or expected idle period duration. In one variant, the media data volume is adjusted such that the client buffer is fully filled to avoid a media client buffer underrun during the following idle period.

The media data volume may be adjusted so that the idle period following the media burst will not fall below a given (variable or constant) duration. Generally, that duration may be above 1s. As an example, the first duration may be above 2s, 5s, 10s or 15s.

The media data volume may be adjusted so that the media data volume of the burst does not exceed a threshold. Additionally, or as an alternative, the media data volume may be adjusted so that a media burst duration does not exceed a threshold. If the media data volume threshold and/or the media burst duration threshold are/is attained or exceeded, the duration of the idle period may be reduced from a first duration to a second duration. Preferably, the second duration is not lower than a predefined threshold.

The method may further comprise transmitting the media burst towards a media client. A media burst may be transmitted via a TCP connection or any other connection.

The media data may comprise one or both of audio data and video data. The media data to be transmitted may take the form of a media file (e.g., a multimedia clip). The media file may be transmitted in connection with a download session from a media server to the media client. As such, the media client may fetch the media file from the media server either directly or via an intermediate network node.

The media burst may be transmitted during a download session. As an example, the media burst may be transmitted during a Hypertext Transfer Protocol (HTTP) or other progressive download session. In one variant, the media client starts rendering or otherwise using the downloaded media data in the progressive download session before the download has been completed.

According to another aspect, a method of operating an access network node in a media distribution network in which media data are transmitted via an access network in media burst to a media client, wherein a media burst is followed by an idle period in which no media data are transmitted. The method comprises analysing a load status of the access network and generating, based on the load status analysis, a control message for controlling adjustment of at least one of a media data volume of a media burst and a duration of an idle period following the media burst. The method further comprises transmitting the control message towards a network node in charge of media burst generation.

Analysing load status may comprise analysing one or more parameters indicative of access network load. As an example, one or more of the following parameters may be analysed: a number of client scheduling contexts maintained by the access network or a component thereof (such as the access network node performing the method according to the present aspect), available resources of the access network or a component thereof for one or more client signalling channels, and a number of media data flows to media clients that support a media burst transmission scheme.

The control message may be indicative of a load status that requires decrease of a access network load. Alternatively, the control message may be indicative of a load status that permits an increase of access network load.

The method performed by the access network node may further comprise receiving information regarding the duration of an upcoming idle period. Such information may be received via an information message each time the idle period duration is changed, or otherwise.

Also provided is a computer program product comprising program code portions for performing the methods or method aspects disclosed herein when the computer program product is executed by a computing device. The computer program product may be stored on a computer-readable recording medium, such as a CD-ROM, DVD or semiconductor memory. The computer program product may also be provided for download via a communication network.

Further provided is a network node for a media distribution network in which media data are transmitted via an access network in media bursts to a media client, wherein a media burst is followed by an idle period in which no media data are transmitted. The network node comprise an interface configured to receive, from the access network, a control message. The network node further comprises controller configured to adjust, responsive to the control message, at least one of a media data volume of a media burst and a duration of an idle period following the media burst.

The network node is in one implementation configured as a media server. In another implementation, the network node is configured as a proxy node for location between a media server and one or more media clients.

The network node may comprise an idleness timer configured to define the idle period between two successive media bursts. The adjustment of the media data volume may be correlated with a setting of the idleness timer.

Still further, an access network node for a media distribution network in which media data are transmitted via an access network in media bursts to a media client is provided, wherein a media burst is followed by an idle period in which no media data are transmitted. The access network node comprises a processor configured to analyse the load status of the access network and to generate, based on the load status analysis, a control message for controlling adjustment of at least one of a media data volume of a media burst and a duration of an idle period following the media burst. The access network node further comprises an interface configured to transmit the control message towards a network node in charge of media burst generation.

The access network node may belong to a wireless or wired access network. In the case of a wireless access network, the access network node may be configured as a Radio Network Control (RNC) or a base station (e.g., an eNodeB).

Furthermore, an access network comprising the access network node presented herein is provided. The access network may be realised as Radio Access Network (RAN).

### Brief Description of the Drawings

Further aspects, advantages and optional features of the present disclosure will become apparent from the following description of exemplary embodiments when taken in conjunction with the drawings. In the drawings,
- Fig. 1A: shows an embodiment of a media distribution network;
- Fig. 1B: shows another embodiment of a media distribution network;
- Fig. 2A: shows an embodiment of a network node;
- Fig. 2B: shows an embodiment of an access network node;
- Fig. 3: shows an embodiment of a media client;
- Fig. 4: shows a screenshot of a media client illustrating a current playout time display and a current buffer fill level display;
- Fig. 5: shows an embodiment of a media burst configuration;
- Fig. 6: schematically illustrates fill level variations of a media client buffer;
- Fig. 7: shows an embodiment of media burst transmissions between a media client and a network node;
- Fig. 8: schematically illustrates a more detailed embodiment of a media distribution network;
- Fig. 9: shows an embodiment of a power consumption state transition scheme for a media client;
- Fig. 10: shows an embodiment of a media burst transmission scheme;
- Fig. 11: is a schematic diagram illustrating a first method embodiment;
- Fig. 12: shows an embodiment of a media burst transmission scheme in accordance with the method embodiment of Fig. 11;
- Fig. 13: is a schematic diagram illustrating a second method embodiment;
- Fig. 14: is a schematic diagram illustrating a third method embodiment;
- Fig. 15: is a schematic diagram illustrating a fourth method embodiment;
- Fig. 16: shows an embodiment of a media burst transmission scheme in accordance with the method embodiment of Fig. 15; and
- Fig. 17: shows a further embodiment of media burst transmissions between a media client and a network node, wherein the media burst transmission is controlled by an RAN node.

### Detailed Description

In the following description of exemplary embodiments, for purposes of explanation and not limitation, specific details are set forth in order to provide a thorough understanding of the present disclosure. It will be apparent to one skilled in the art that the present disclosure may be practised in other embodiments that depart from these specific details. For example, while certain embodiments will be described in connection with a TCP connection for media data transmission, it will be appreciated that other transport layer transmission technologies may be used as well. Moreover, while some embodiments will describe client-side power saving measures based on exemplary RRC state transitions and RRC inactivity timers, it will readily be apparent that additional or alternative power saving measures may be initiated on the side of the media client during an idle period. It will also be evident that the present disclosure is not limited to any specific technology for gaining network access by the media client. Such network access may in principle be based on either wired or wireless technologies, or combinations thereof.

Still further, those skilled in the art will appreciate that the services, functions and steps explained herein may be implemented using software functioning in conjunction with a programmed microprocessor, an Application Specific Integrated Circuit (ASIC), a Digital Signal Processor (DSP) or a general purpose computer. It will also be appreciated that while the following embodiments will primarily be described with reference to methods and devices, the present disclosure may also be embodied in a computer program product as well as in a system comprising a computer processor and a memory coupled to the processor, wherein the memory is encoded with one or more programs that may perform the services, functions and steps disclosed herein.

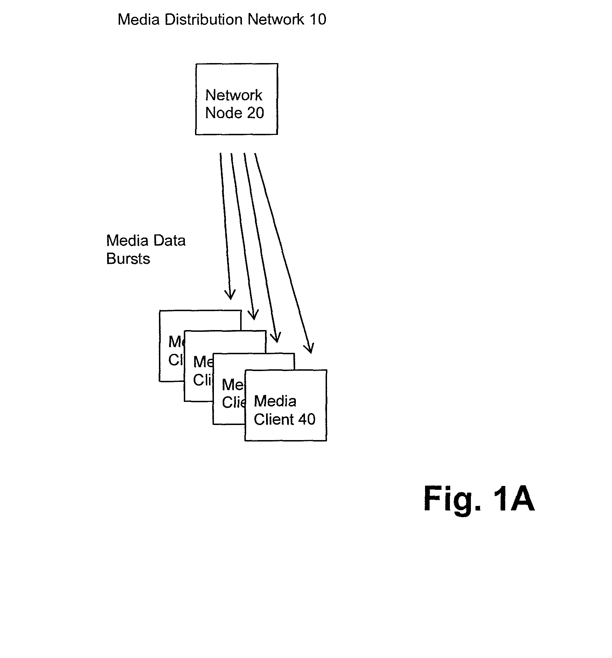

Fig. 1A illustrates an embodiment of a media distribution network 10 comprising a network node 20 and one or multiple media clients 40. The media clients 40 may be configured as stationary or portable devices. As an example, the media clients 40 may be realized as mobile telephones, smartphones, tablet computers, personal computers, laptops, and so on. The network node 20 may be realized as a server or may be integrated into a server. Alternatively, the network node 20 may be realized as a proxy or may be integrated into a proxy.

The network node 20 is configured to transmit media data, such as a media file requested for a download by an individual one of the media clients 40, in bursts to the respective media client 40. The media data thus received may be temporarily or permanently stored at the media client 40. Alternatively, or in addition, the media data may be rendered by the media client 40. The specific rendering depends on the nature of the media data. As an example, video data may be rendered on a display of the media client 40, whereas audio data may be played back via a loudspeaker or a headphone.

The media data transmission from the network node 20 to each individual media client 40 may be based on a unicast connection over a wired or wireless communication network. The unicast connection may be used for streaming the media data from the network node 20 to the media client 40 that requested the media data. The streaming is one variant based on a session concept and may be performed under control of a streaming protocol (e.g., the Real Time Streaming Protocol, RTSP, or progressive streaming via HTTP).

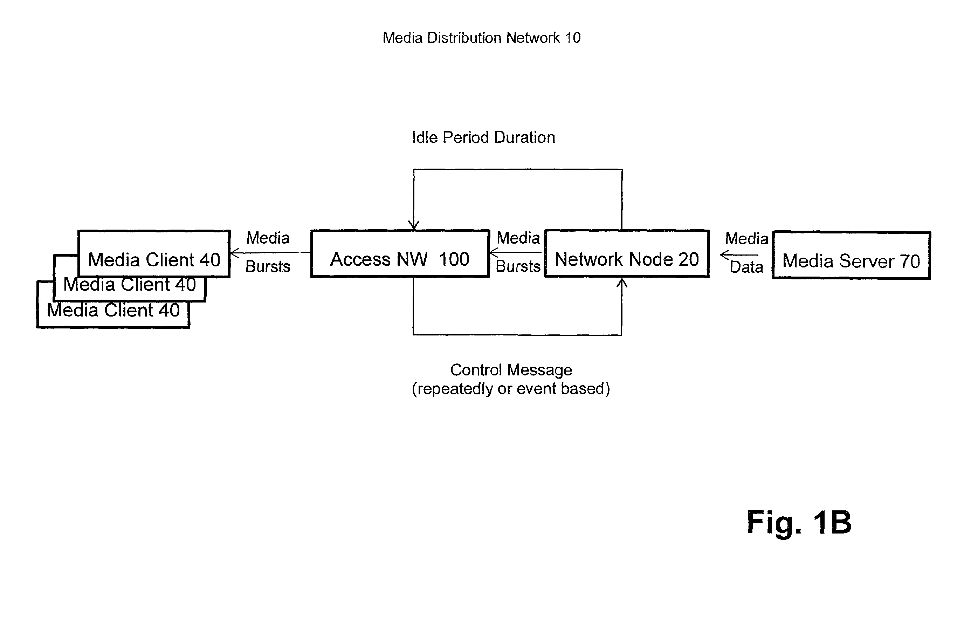

Fig. 1B illustrates a more detailed embodiment of the media distribution network 10 of Fig. 1A. As shown in Fig. 1B, an access network 100 is located between the network node 20 and the one or more media clients 40. Moreover, the network node 20 is configured as a proxy node, or simply proxy, located between a media server 70 providing encoded media data and the access network 100.

The access network 100 may generally be configured to provide wireless or wired network access to the one or multiple media clients 40. As an example, the access network 100 may be a RAN (e.g., of a cellular communication system) and the media clients 40 may be mobile devices. The network node 20 and the media server 70 may be located in a core network and a service network, respectively, accessible via the access network 100.

As will be discussed in more detail below, the access network 100 is capable of transmitting a control message to the network node 20 to adjust a media burst transmission scheme applied by the network node 20. The network node 20, in term, is capable of informing the access network 100 of an expected or scheduled idle period duration in the media burst transmission scheme.

Additionally, or as an alternative, the network node 20 is capable of informing the access network 100 to send an "End-Of-Burst" (EOB) indication to the access network 100 (e.g., for a media data flow directed to an individual one of the media clients 40). As will be explained in more detail below, such EOB signalling permits the access network 100 to estimate a load impact of any adjustment in the media burst transmission scheme (e.g., an adjustment of an idle period duration).

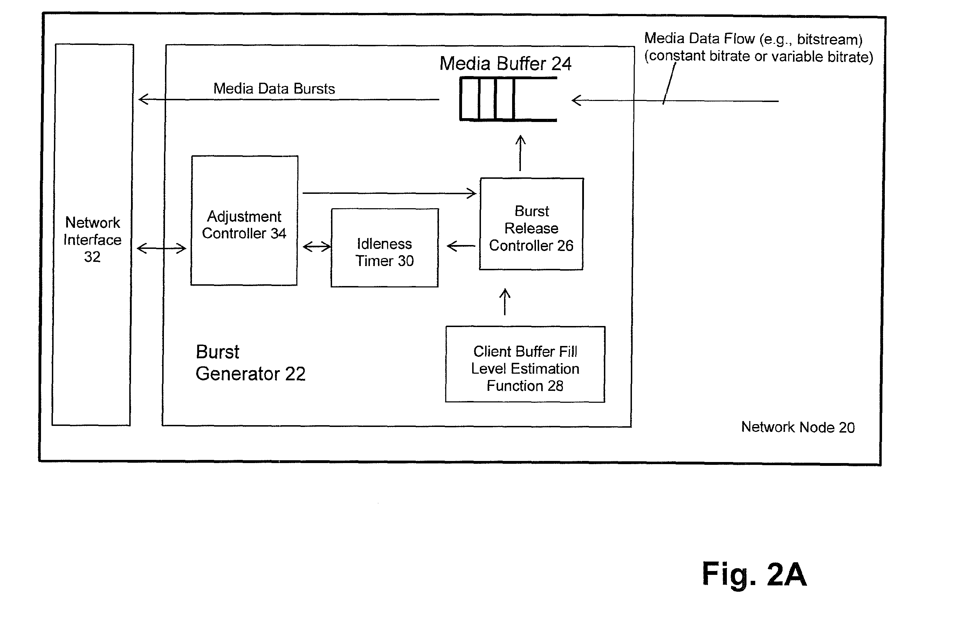

Fig. 2A illustrates individual components of the network node 20 shown in Figs. 1A and 1B. It should be noted that only the components necessary for understanding the present disclosure are shown. That is, the network node 20 will typically include additional components not illustrated in Fig. 2A.

As shown in Fig. 2A, the network node 20 comprises a burst generator 22 and a network interface 32. The burst generator 22 is configured to receive a media data flow and transform that media data flow into media bursts. The network interface 32 is configured to transmit the media bursts towards one or more of the media clients 40 illustrated in Fig. 1A and 1B.

There exist various possibilities how the network node 20 may obtain access to the media data flow. The media data flow may have been generated locally by the network node 20. In such a case, the network node 20 can itself be configured as a media server. In the alternative embodiment illustrated in Fig. 1B, the media data flow is received by the network node 20 from the media server 70 coupled to the network node 20 via the network interface 32 (or a separate interface not illustrated in Fig. 2A).

The media data flow received by the burst generator 22 may be a bitstream representative of a media file (e.g., a multimedia clip) requested by one of the media clients 40 in Figs. 1A and 1B for download. The media data flow may have a constant or variable bitrate. The bitstream may comprise individual units of encoded media data. The encoded media data may, for example, comprise video frames or any other encoding units such as audio samples generated by a media data encoder. The media data encoder may be compliant with any encoding format, such as the H.264 format, the Moving Pictures Expert Group 2 Transport Stream (MPEG2-TS) format, an International Standardization Organization (ISO)-based media file format (e.g., ISO-BMFF), the Audio Video Interleave (AVI) format, and so on.

Still referring to Fig. 2A, the burst generator 22 comprises a media buffer 24, a burst release controller 26, a client buffer fill level estimation function 28, an idleness timer 30 and an adjustment controller 34. The burst generator 22 may, of course, comprise further components not shown in Fig. 2A.

The media data flow received by the burst generator 22 is initially stored in the media buffer 24. The burst release controller 26 is configured to release the media data buffered in the media buffer 24 in individual media bursts. Each media burst has a dedicated media data volume that is adjusted by the controller 26 taking into account one or multiple constraints. Here, the media data volume of an individual burst is adjusted by the burst release controller 26 dependent on a fill level of a media client buffer (not shown in Fig. 2A) and input from the adjustment controller 34. In another variant, the duration of an idle period following a specific media burst is adjusted by the controller 26 dependent on the media client buffer fill level. Of course, in certain scenarios both the media data volume for a media burst as well as the duration of an idle period following that media burst may be adjusted by the controller 26 based on the fill level.

The fill level is estimated by the estimation function 28 based on a buffering model. In the present embodiment, the buffering model applied by the estimation function 28 takes into account at least a volume of transmitted media data (i.e., a buffer filling process) and a buffer draining process at the media client 40.

The volume of transmitted media data is measured based on the media data volume of one or more bursts that have been released previously in the pending media data transmission session. The transmitted media data volume may in one implementation be measured based on the transmitted data volume (e.g., in bytes) that can more easily be measured. The transmitted data volume may exceed the transmitted media data volume by a negligible amount (e.g., by control information associated with packing the media data into data units).

Additionally, or as an alternative, the volume of transmitted media data may be derived from characteristics or attributes of the media data (e.g., from a media file including the media data). Such characteristics or attributes may include compressed media time information. This information can be derived from so-called time-to-sample boxes of an ISO-BMFF-compliant or similar media file. Such information can be derived from so-called time-to-sample boxes of an ISO-BMFF-compliant or similar media file. The time-to-sample boxes (as, e.g., contained in the sample table box "stbl") can be used to determine the byte offset into the file for an encoding unit (e.g., a video frame or audio sample) with a given media timestamp. The difference of the byte offsets of two given encoding units can be used to calculate a data volume (and thus a volume of transmitted media data). Other media file formats include other information to calculate the byte offset of an encoding unit with a given timestamp.

Also a wall clock time associated with the media data may be taken into account here to estimate the client buffer fill level. The media client 40 is draining the media buffer 44 while that buffer 44 gets filled. As such, one may measure or estimate the duration of the buffer fill process (in terms of the wall clock time) in order to compensate for the buffer draining process while the media buffer 44 is being filled.

The client buffer draining process may be estimated by the estimation function 28. Such an estimation may also be based on any characteristics or attributes of the media data received by the burst generator 22. In cases in which the media data are included in a media file, the buffer draining process may be estimated from the timing and the size of the individual encoding units (e.g., video frames and/or audio samples) as derivable from the media file.

As shown in Fig. 2A, the burst generator 22 further comprises an idleness timer 30 coupled to the burst release controller 26 and the adjustment controller 34. The idleness timer 30 is configured to define a variable idle period between two successive media bursts. In one exemplary realization, the burst release controller 26 starts the idleness timer 30 at the end of a burst release process. Once the idleness timer 30 has expired, a new burst release process is started. It should be noted that an individual burst release process may extend over a certain period of time depending on the media data volume that needs to be transmitted with the released media burst.

The adjustment controller 34 is configured to communicate with the burst release controller 26 to adjust a media data volume of a media burst released by the burst release controller 26. The adjustment controller 34 is further configured to communicate with the idleness timer 30 to adjust a duration of an idle period following the media burst. The adjustments carried out by the adjustment controller 34 are performed responsive to one or more control messages received from the access network 100 of Fig. 1B via the network interface 32 or any other (e.g., dedicated) interface. Additionally, the adjustment controller 34 is configured to inform the access network 100 of the current idle period duration (i.e., the setting of the idleness timer 30), as also illustrated in Fig. 1B.

In the present embodiment, a control message that triggers adjustments with respect to the idleness timer 30 and/or the burst release controller 26 is indicative of a load status of the access network 100. As such, the adjustments performed by the adjustment controller 34 target at adapting the burst transmission scheme implemented by the network node 20 in accordance with the load status of the access network 100.

As an example, if the control message is indicative of a load status that requires a decrease of access network load, the media data volume transmitted with the next one or more media bursts may be increased. To this end, a target media data volume of the burst release controller 26 may be changed from a first value to a second, higher value. Alternatively, or in addition, an idle period duration is extended. To this end, the idleness timer 30 may be configured to enforce a longer idle period duration.

In certain embodiments, the number of idle periods used for transmitting a certain media data volume (e.g., a media file or portion thereof) may be decreased. In cases in which the idle periods permit a media client 40 to transit into a more power-efficient state under optional control of the access network 100, decreasing the number of idle periods reduces the processing overhead at the access network 100 in terms of the associated state control. As such, access network load can be decreased.

On the other hand, when the control message is indicative of a load status that permits an increase of access network load, the media data volume of one or more subsequent media bursts may be decreased. Additionally, or as an alternative, the duration of the associated one or more idle periods may be shortend. When decreasing the media data volume of a specific burst, it may be evaluated whether the duration of the idle period that follows needs to be shortend also (e.g., in order not to risk a buffer underrun of the media client 40).

In certain embodiments, the number of idle periods used for transmitting a certain media data volume may be increased. Such an increase may in some situations (e.g., when the idle periods are utilized by a media client 40 for transiting into a more-power efficient state under control of the access network 100) lead to an increase of access network load.

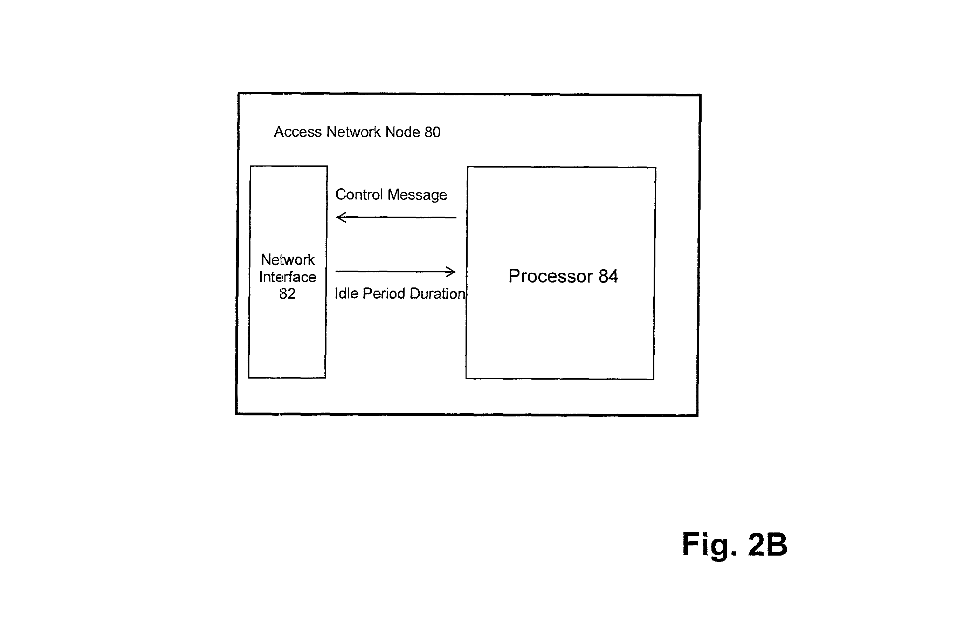

Fig. 2B exemplarily illustrates the components of the access network node 80 illustrated in Fig. 1B as far as necessary for understanding the present disclosure. It will be appreciated that the access network node 80 will comprise additional components not shown in Fig. 2B (in particular with respect to its dedicated network access functionalities).

As illustrated in Fig. 2B, the access network node 80 comprises a network interface 82 as well as a processor 84. The processor 84 is configured to analyse a load status of the access network 100, for example a local load status of the access network node 80. Such an analysis may pertain to the number of scheduling contexts maintained for the media clients 40, or the available resources of the access network 100 for signalling channels (i.e., control channels) extending to the media clients 40. In one particular example, the signalling channels may be capable of RRC signalling (e.g., for implementing a power saving scheme for the media clients 40 during the idle periods). Furthermore, the number of media data flows to media clients 40 that support a media burst transmission scheme may be analysed by the processor 84. To this end the processor 84 may be informed, by the network node 20 and via the network interface 82, of the individual media data flows to the media clients 40 that employ a media burst transmission scheme. Such information may, for example, be derived from or precede EOB signalling.

The processor 84 is further configured to generate, based on the load state analysis, one or multiple control messages for controlling adjustment of at least one of a media data volume for a media burst and an duration of an idle period following the media burst. The interface 82 is configured to transmit such control messages toward the network node 20 of Fig. 2A. The control messages will be received and processed by the adjustment controller 34 of the network node 20 as discussed above with reference to Fig. 2A.

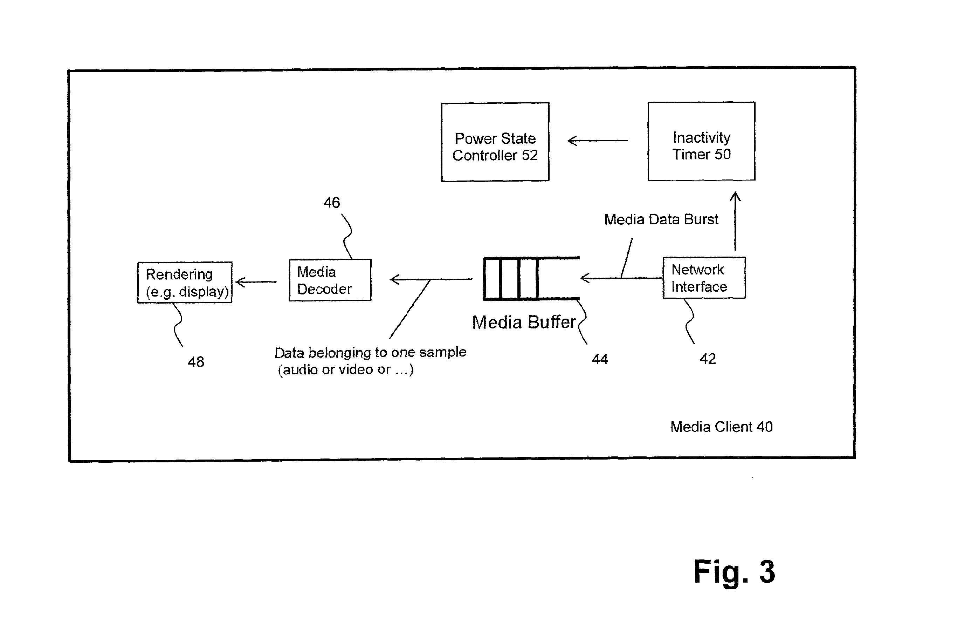

Fig. 3 exemplarily illustrates the components of a media client 40 useful for practicing the present disclosure. It will be appreciated that in other embodiments the media client 40 may comprise alternative or additional components.

As shown in Fig. 3, the media client 40 comprises a network interface 42 coupled to a communication network and configured to receive the media bursts generated by the network node 20 of Fig. 2A via the access network 100 of Fig. 1B. The media client 40 further comprises a media buffer 44 configured to temporarily store the media data received via the media bursts. In the media buffer 44, the media data may be arranged in the form of individual media samples (e.g., in the form of video frames).

Conventionally, the media buffer 44 is provided to compensate for the fact that the individual frames read from the media buffer 44 may have different sizes when predictive encoding is used (e.g., P-/B-frames have smaller sizes than I-frames). Moreover, the media buffer 44 conventionally also permits to compensate delay jitter and brief reception outages (e.g., due to mobility of the media client 40). Here, typical sizes of the media buffer 44 (e.g., for media clients 40 capable of progressive media file download) are sufficiently large to buffer 10 seconds, 20 seconds, or more of media data (in terms of playout time). Thus, it becomes possible to stop the filling process for a media buffer 44 for several seconds and only drain it.

A media decoder 46 located downstream of the buffer 44 is configured to fetch the media data from the media buffer 44 according to decoding timestamps of the buffered media samples. As an example, the media decoder 46 may fetch the media data from the media buffer 44 at intervals of 40 ms (e.g., for a 25 frames-per-second videostream).

The media decoder 46 is further configured to decode the media data fetched from the media buffer 44 and to put them into an appropriate order for rendering. The media decoder 46 may be compliant with one or multiple encoding standards such as H.264.

The decoded media data are finally rendered by a rendering function 48 depending on their nature. As an example, video or picture data may be displayed, and audio data may be played back by a loudspeaker.

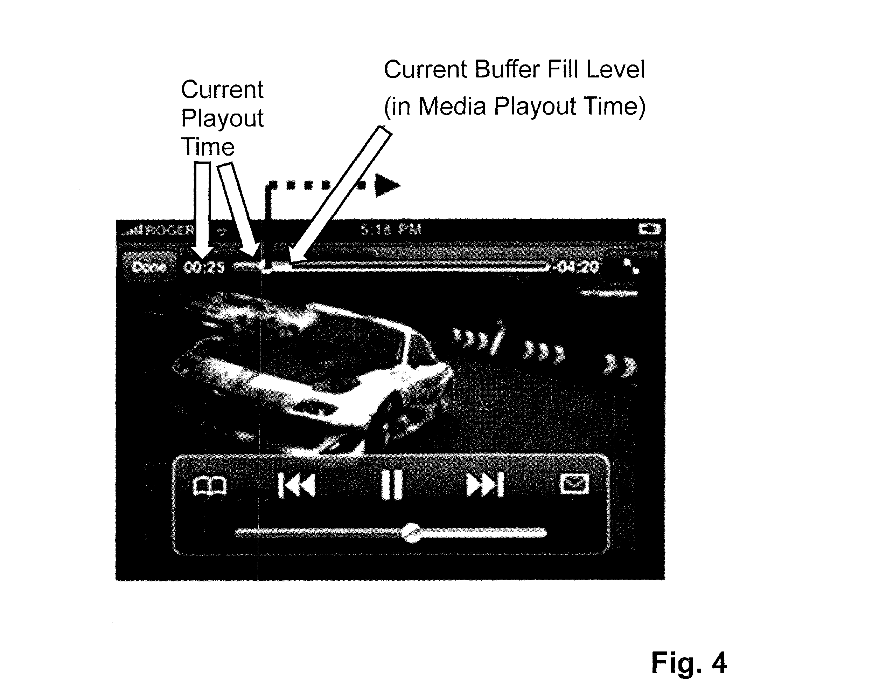

Fig. 4 illustrates a screenshot of video data rendered by the rendering function 48 and provided by a progressive download application. In addition to a video display window and a playout control bar, the screen visualizes both the current playout time (via a counter and a progressively moving icon) and the current fill level of the media buffer 44 (by a progress bar). As will be appreciated, the progress bar indicative of the actual fill level of the media buffer 44 should always be ahead of the icon indicative of the current playout time.

The embodiment of the media client 40 depicted in Fig. 3 is configured to immediately render the received media data via the rendering function 48. Such an immediate rendering can be performed in connection with a video-on-demand application or in connection with live streaming. It will be appreciated that in other embodiments the received media data may simply be stored for later use in a storage (not shown) downstream of the media buffer 44.

As has been explained above with reference to Fig. 2A, the burst generator 22 of the network node 20 generates the media bursts in accordance with an estimated fill level of the client-side media buffer 44 shown in Fig. 3. Thus, it is the task of the estimation function 28 of the burst generator 22 to estimate the fill level of that media buffer 44 based on *a priori* knowledge available to the network node 20. As such, the media data volumes of the media bursts received by the media client 40 will reflect the associated fill level estimations performed by the network node 20.

As shown in Fig. 3, the media client 40 further comprises an inactivity timer 50 and a power state controller 52. In the present embodiment, the inactivity timer 50 is coupled to the network interface 42. In other embodiments, at least one of the inactivity timer 50 and the power state controller 52 may be integrated into the network interface 42.

The inactivity timer 50 is configured to be started at the end of a media burst reception process. If no further media burst is received prior to expiry of the inactivity timer 50 (i.e., if the idle period following the media burst is longer than the duration of time monitored by the inactivity timer 50), the power state controller 52 is triggered. Upon being triggered, the power state controller 52 controls one or multiple components of the media client 40, such as the network interface 42, to transit from a first state of power consumption into a second state of power consumption, wherein the first state is associated with a higher power consumption than the second state. The first state of power consumption is resumed once a new media burst arrives at the network interface 42 that needs to be buffered in the media buffer 44.

It should be noted that both the inactivity timer 50 and the power state controller 52 are optional and may be omitted in certain embodiments. When present, the adjustments of the media burst data volumes by the burst generator 22 of the network node 20 (see Fig. 2A) may be performed such that idle period durations can be guaranteed that permit the inactivity timer 50 to expire without risking an underrun of the media buffer 44 during an ongoing media rendering process. Of course, in other embodiments, the media data volumes of the media bursts may be adjusted by the first generator 22 to realize different objects.

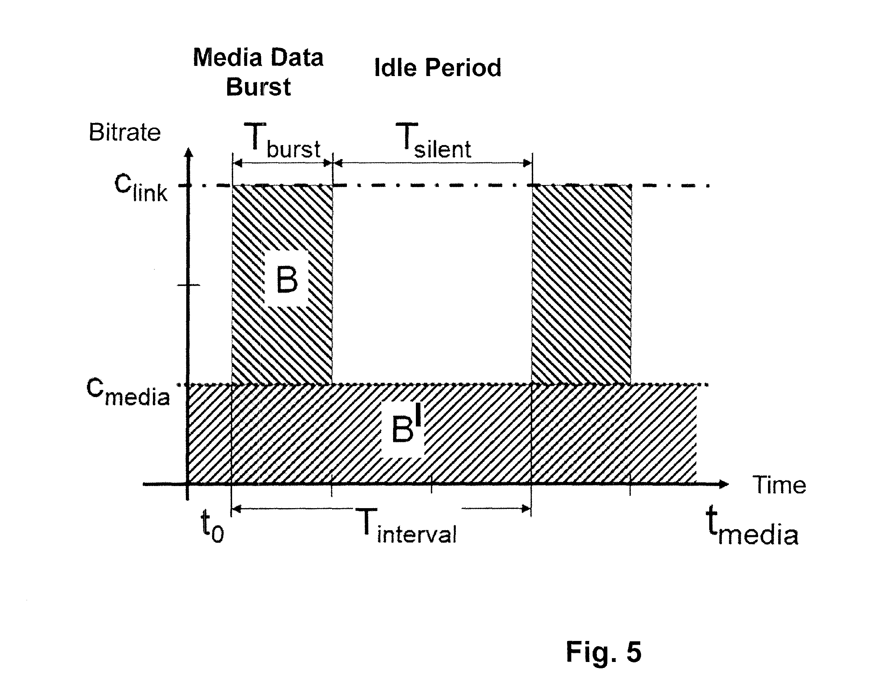

Fig. 5 is a timing diagram that schematically illustrates the draining process of the client-side media buffer 44 relative to the buffer filling process via the media bursts. As shown in Fig. 5, it is assumed that the media buffer 44 is drained by the media decoder 46 at an essentially constant rate referred to as media bitrate C_{media}. It should be noted that C_{media} typically varies over time (e.g., in a video-on-demand scenario). In many cases, C_{media} is determined during media data encoding by a content provider that offers the media data for download.

The filling process for the media buffer 44 is achieved via the media bursts transmitted to the media client 40 via a network connection having an available link bitrate Cₗᵢₙₖ. As will be appreciated, Cₗᵢₙₖ will typically vary over time. In case of a wireless network connection, variations in Cₗᵢₙₖ will, for example, depend on the prevailing radio conditions and the radio traffic generated by other users.

In the scenario illustrated in Fig. 5, it is assumed that the available link bitrate Cₗᵢₙₖ is fully used for transmission of an individual media burst having a duration T_{burst}. Therefore, the media burst illustrated in Fig. 5 will have a media data volume B = Cₗᵢₙₖ x T_{burst}. In the present scenario, T_{burst} indicates the period of time required by the media client 40 to fetch the specific media burst. Generally, if a target media data volume is to be transmitted via a specific media burst, the duration of the burst T_{burst} depends on the available link bitrate Cₗᵢₙₖ. The higher the link bitrate Cₗᵢₙₖ available for the media client 40, the shorter will be the burst fetching duration T_{burst}.

As illustrated in Fig. 5, each media burst is followed by an idle period in which no media data are transmitted. The idle period has a duration Tₛᵢₗₑₙₜ. The aggregated durations of the media burst T_{burst} and of the idle period Tₛᵢₗₑₙₜ that follows the media burst define a time window having a window duration Tᵢₙₜₑᵣᵥₐₗ. The window duration Tᵢₙₜₑᵣᵥₐₗ may be controlled by the network node 20 to be constant or to be variable, depending on the current needs.

During the window duration Tᵢₙₜₑᵣᵥₐₗ, the media buffer 44 of the media client 40 is filled with B byte. At the same time, the buffer is drained at a rate of B' = C_{media} x Tᵢₙₜₑᵣᵥₐₗ. It will be appreciated that the media data volume B of the burst should be adjusted such that is does not fall below B' (i.e., B > = B'). In case B = B', the (minimum) burst duration T_{burst} can be calculated as T_{burst} = (C_{media} x Tᵢₙₜₑᵣᵥₐₗ)/Cₗᵢₙₖ. The resulting (maximum) duration of the associated idle period can be expressed as Tₛᵢₗₑₙₜ = (1 - C_{media}/Cₗᵢₙₖ) X Tᵢₙₜₑᵣᵥₐₗ.

In one implementation, the burst duration T_{burst} may be adjusted to the current link bitrate Cₗᵢₙₖ, so that the idle period duration Tₛᵢₗₑₙₜ does not fall below a certain threshold. In other words, the media data volume B of a media burst may be adjusted such that a certain idle period duration can be ensured without risking an underrun of the media buffer 44 of the media client 40. To this end, the burst generator 22 may adjust the media data volume B of a specific media burst dependent on the estimated fill level of the media buffer 44 (at the end of the idle period) so that the duration of the idle period Tₛᵢₗₑₙₜ does not have to become overly short.

As will be appreciated, short idle period durations Tₛᵢₗₑₙₜ can be inefficient in consideration of the processing overhead associated with media burst generation. Moreover, longer idle period durations Tₛᵢₗₑₙₜ increase the possibility that the inactivity timer 50 of the media client 40 can expire, so that the media client 40 can transit to a state of reduced power consumption. On the other hand, overly long idle period durations Tₛᵢₗₑₙₜ are associated with an unnecessary waste of transmission bandwidth in case the user decides to abandon, or abort, for example an ongoing download session. All those considerations may be taken into account and combined as needed to select a suitable idle period duration Tₛᵢₗₑₙₜ for a specific usage scenario.

An upper bound for Tᵢₙₜₑᵣᵥₐₗ is determined by a depth (i.e., size) of the client-side media buffer 44. Typical sizes will correspond to a buffered playout time of a few seconds (e.g., up to 5, 10 or 20 s or even substantially more). As said, a lower bound for Tᵢₙₜₑᵣᵥₐₗ will in certain embodiments be determined by the settings of the inactivity timer 52. It should be noted here that changing a power consumption state will always require some processing overhead (e.g., signalling load). Thus, the lower bound for Tᵢₙₜₑᵣᵥₐₗ may be selected such that the state of lower power consumption can be maintained for a sufficiently long time to justify the transit from the state of higher power consumption to the state of lower power consumption.

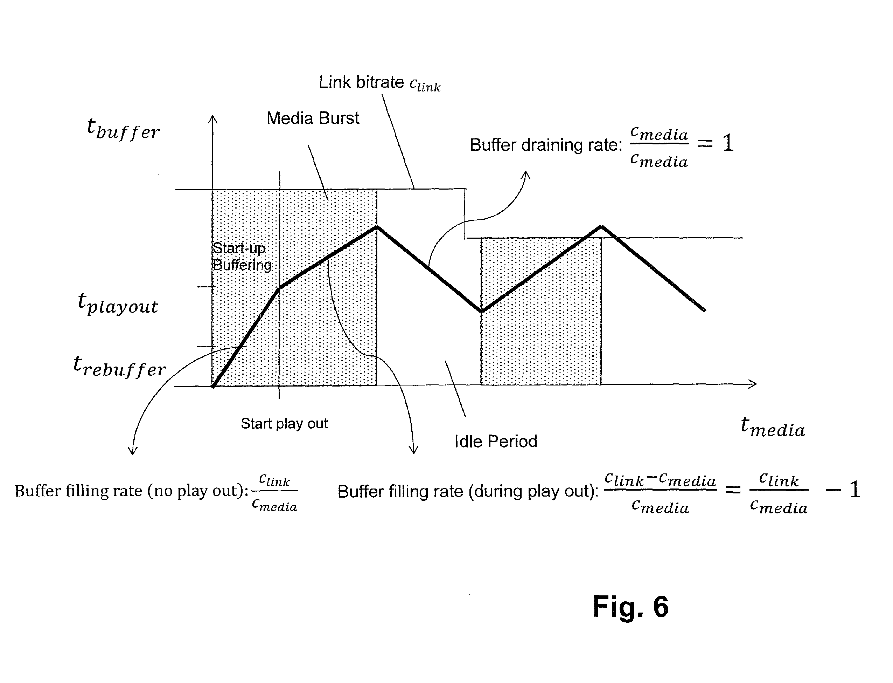

Fig. 6 illustrates a modelling of the fill level of the media buffer 44 as a function of time. Here, the fill level of the media buffer 44 is indicated in units of buffered media time (t_{buffer}). The buffering process is illustrated for a scenario in which the media client 40 fetches a media file and starts rendering the media data via the rendering function 48 while still receiving that file via the individual media bursts ("progressive download"). The diagram of Fig. 6 constitutes a buffering model that may be used by the estimation function 28 of the burst generator 22 to adjust the media data volumes B of the individual media bursts.

As shown in Fig. 6, the download session starts with a short period of time during which media data are received in a media burst, but the rendering (playout) process has not yet started ("buffering only"). After a certain buffer fill level t_{playout} has been reached, the media decoder 46 starts draining the media buffer 44 according to the media bitrate c_{media}, and playout by the rendering function 48 can start. Typically, a further predefined buffer fill level t_{rebuffering} indicates a minimum fill level at which the media client 40 enters a re-buffering state. During the re-buffering state, playout by the rendering function 48 will be freezed.

Fig. 6 indicates that the fill level of the client-side media buffer 44 can be modelled taking into account the ratio between the available link bitrate cₗᵢₙₖ and the media bitrate c_{media}. As becomes apparent, also variations in the link bitrate cₗᵢₙₖ should be taken into account.

The individual buffer filling rates, or gradients, shown in Fig. 6 are indicative of how quickly the media buffer 44 of the media client 40 is filling taking into account both buffer filling and buffer draining processes. It is generally preferred that the buffer filling rate is large (which means that the link bitrate cₗᵢₙₖ should be substantially larger than the media bitrate c_{media}). Nonetheless, c_{media} and cₗᵢₙₖ are typically varying as also shown in Fig. 6. As such, the buffer filling rate is also varying, and such variations need to be taken into account by the estimation function 28.

The burst-based filling process of the media buffer 44 shown in Fig. 6 permits to control the buffer filling rate via multiple of the parameters discussed above (e.g., via the media data volume B of an individual media burst and/or the idle period duration Tₛᵢₗₑₙₜ). The buffer filling rate may be controlled such that the losses of buffered media data are minimized when a user of the media client 40 decides to stop rendering the media data. It has, for example, been found that users are often only watching the first seconds of a multimedia clip and then proceed to the next multimedia clip without completely watching the first ("clip abandonment"). To limit the losses created by clip abandonment, and the resulting waste of transmission bandwidth, the buffer filling rate may in one embodiment be controlled ("paced") such that the buffer level of the media buffer 44 is just filled to the point to keep the rendering function 48 operable during the idle period (i.e., to avoid a buffer underrun). Such pacing can thus also be implemented in connection with transmission of the media data in individual media bursts as presented herein.

As will be appreciated, an adjustement of the idle period duration (e.g., depending on one or both of the client buffer fill level and power state transitions as explained below in more detail) will influence the pacing "gain". A shorter idle period duration leads to a fine-grained pacing. This means that an abandonment by a user will lead to a comparatively lower waste of transmission bandwidth. Conversely, longer idle period durations require that in the preceding media bursts a larger media data volume has to be transmitted, which leads to a more coarse-grained pacing (i.e., higher losses and less efficient transmission bandwidth usage).

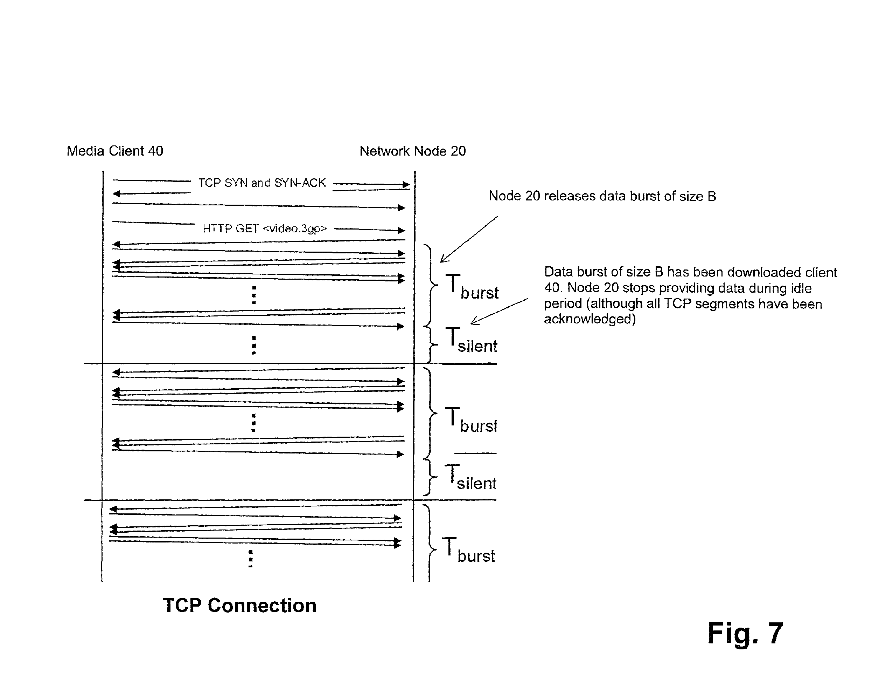

Fig. 7 schematically illustrates the signalling between the network node 20 and the media client 40 in connection with an exemplary media file download, such as an HTTP progressive download session. In certain implementations, the same TCP connection may be used during the entire download session. In other implementations, two or more TCP connections may be used (e.g., one TCP connection per burst). In case the media client 40 employs TCP flow control, it may adjust a TCP window size depending on its needs. Therefore, the TCP window size may shrink during an idle period duration Tₛᵢₗₑₙₜ, which means that the available link bitrate Cₗᵢₙₖ cannot be immediately used by the TCP connection.

The TCP flow sequence illustrated in Fig. 7 starts with TCP SYN signalling initiated by the media client 40 to the network and an associated acknowledgment (SYN-ACK) by the network node 20 or a media server (not shown). Then, the media client 40 initiates a download session via a HTTP GET command that is again acknowledged by the network. In the example of Fig. 7, the media client 40 requests the media file "video.3gp" for download.

Next, a first media burst including a portion of the requested media file is transmitted from the network node 20 to the media client 40. As illustrated in Fig. 7, the media burst comprises multiple individual media data transports to the media client 40. With each media transport, an individual TCP segment is sent from the network node 20 to the media client 40. Successful receipt of a TCP segment by the media client 40 is acknowledged ("ACK") back to the network node 20. This acknowledgement triggers transmission of the next TCP segment within the same media burst. Dependent on the configuration of the network node 20, a TCP segment may be re-transmitted in case no acknowledgement is received within a predefined period of time (or in case a negative acknowledgement "NACK" is received).

The burst generator 22 of the network node 20 keeps track of the data transmitted during an ongoing media burst (e.g., in terms of bytes). As soon as the transmitted volume of data equals or exceeds a (target) media data volume B, the network node 20 terminates the media burst (i.e., terminates the further transmission of TCP segments for the ongoing burst).

As indicated in Fig. 7, all TCP segments of a media burst need to be acknowledged. This means that the network node 20, after the media burst has been terminated, waits for an acknowledgement of receipt of the last TCP segment and then starts the idleness timer 30. The idleness timer 30 defines the duration of the idle period Tₛᵢₗₑₙₜ. During the idle period, no TCP segments will be transmitted (or provided for download) by the network node 20. Only upon expiry of the idleness timer 30, the next media burst is transmitted as illustrated in Fig. 5.

As stated above, a TCP window size may shrink during the idle period between two media bursts. As such, the TCP connection between the network node 20 and the media client 40 may be in a slow start phase when a new media burst is transmitted after an idle period. This situation may be taken into account by the burst generator 22 (e.g., by the estimation function 28).

It should further be noted that instead of the idleness timer 30, or in addition to that timer 30, other mechanisms for determining the duration of the idle period Tₛᵢₗₑₙₜ may be employed as needed. Specifically, in other embodiments the idle period duration Tₛᵢₗₑₙₜ may vary within a download session.

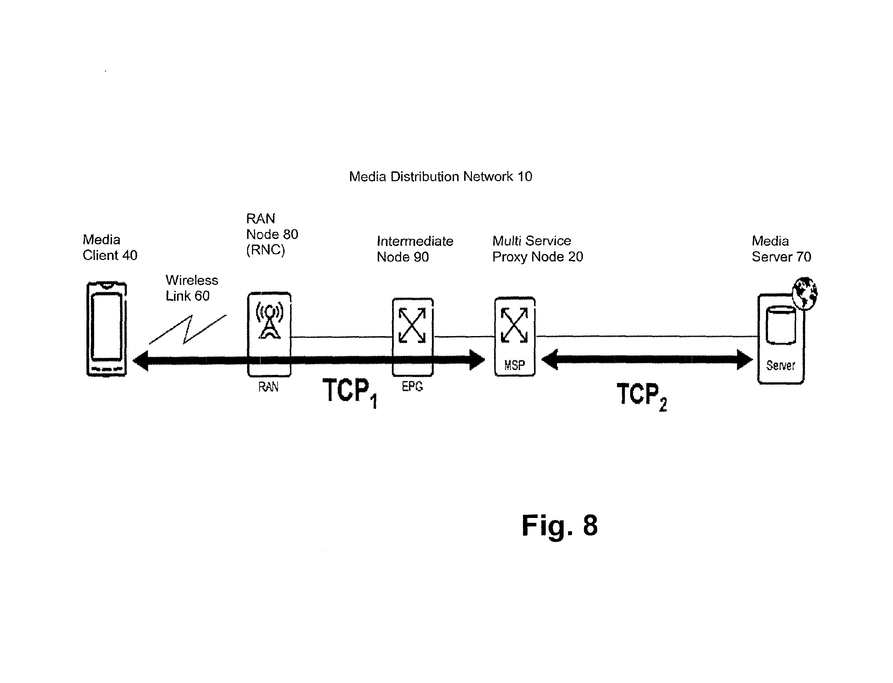

Fig. 8 illustrates a possible implementation of the network node 20 and the media client 40 in a media distribution network 10. The media client 40 is wirelessly attached via a communication network that comprises a wireless link 60 to a media server 70 located in a service network. The media client 40 may thus be realized as a mobile device. As illustrated in Fig. 8, the wireless link 60 stretches between the media client 40 and a Radio Access Network (RAN) node 80 (e.g., an RNC or eNodeB).

In the embodiment illustrated in Fig. 8, the network node 20 in charge of burst generation is located as a Multi-Service Proxy (MSP) node 20 (simply called proxy node 20 hereinafter) in the core network between the RAN node 80 and the media server 70. An optional Evolved Packet Gateway (EPG) is located as intermediate node 90 between the proxy node 20 and the RAN node 80. The intermediate node 90 may comprise the functionality of a Packet Data Network Gateway (P-GW) and serve as a mobility anchor as generally known in the art. It should be noted that in other deployments the proxy node 20 could also be placed between the RAN node 80 and the intermediate node 90.

A first TCP connection TCP₁ stretches between the media client 40 and the proxy node 20, and a second TCP connection TCP₂ stretches between the proxy node 20 and the media server 70. It should be noted that the presence of the proxy node 20 is not detectable by the media client 40. That is, the proxy node 20 is arranged transparently between the media client 40 and the media server 70 so that the media client 40 may assume that it has a direct TCP connection to the media server 70. In other embodiments, the proxy node 20 may be realized in a non-transparent manner, which means that it may be detectable by the media client 40.

The two TCP connections TCP₁, TCP₂ illustrated in Fig. 8 may be utilized for a progressive download session as discussed above. The TCP connection illustrated in Fig. 7 will be the TCP connection TCP₁ between the media client 40 and the proxy node 20 in Fig. 8. Via the TCP connection TCP₂ to the media server 70, the proxy node 20 may receive the media data flow for processing by the burst generator 22 (see Fig. 2A).

In the scenario illustrated in Fig. 8 the media client 40 comprises the inactivity timer 50 and the power state controller 52 illustrated in Fig. 3. The inactivity timer 50 and the power state controller 52 belong to an RRC functionality of the media client 40. The RRC functionality is part of a Universal Mobile Telecommunication System (UMTS) Wideband Code Division Multiple Access (WCDMA) protocol stack of the network interface 42 installed in the media client 40. That protocol stack handles control plane signalling on Layer 3 between the network interface 42 of the media client 40 and a corresponding network interface of the RAN node 80. As will be appreciated, similar RRC functionalities exist in other wireless communication systems, such as the Long Term Evolution (LTE) communication system.

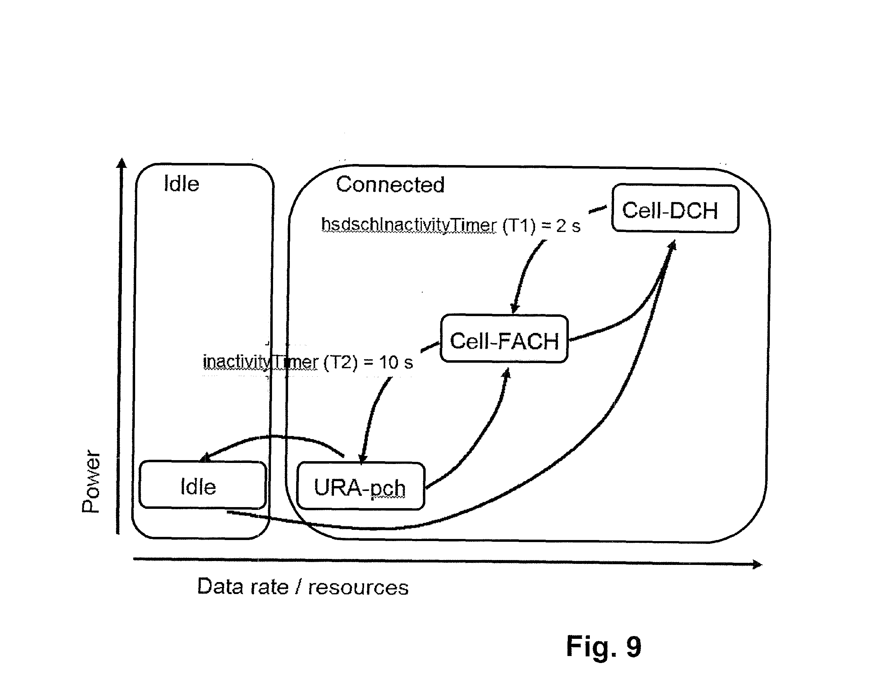

Fig. 9 illustrates the various RRC states that may be implemented in the network interface 42 of the media client 40 in an exemplary UMTS Terrestrial RAN (UTRAN) scenario. As illustrated in Fig. 9, the individual RRC states require different data rates and processing resources, and as such are associated with different power consumption levels. The transition between the individual states is controlled by two dedicated RRC inactivity timers (only one such timer 50 has been illustrated in Fig. 3).

The configuration of the RRC inactivity timers has considerable impact on the battery life of the (mobile) media client 40. Specifically, the RRC idle mode (no connection) has the lowest energy consumption. The states in the RRC connective mode, in order of decreasing power consumption, are CELL_DCH (Dedicated Channel), CELL_FACH (Forward Access Channel), CELL_PCH (Cell Paging Channel) and URA_PCH (URA Paging Channel). The power consumption in the CELL_FACH state is roughly 50% of that in the CELL_DCH state, and the PCH states use about 1 to 2% of the power consumption of the CELL_DCH state.

The transitions to states of lower power consumption are triggered by expiry of the inactivity timers as illustrated in Fig. 9. The specific settings of the inactivity timers may be defined by network operators and can be variable.

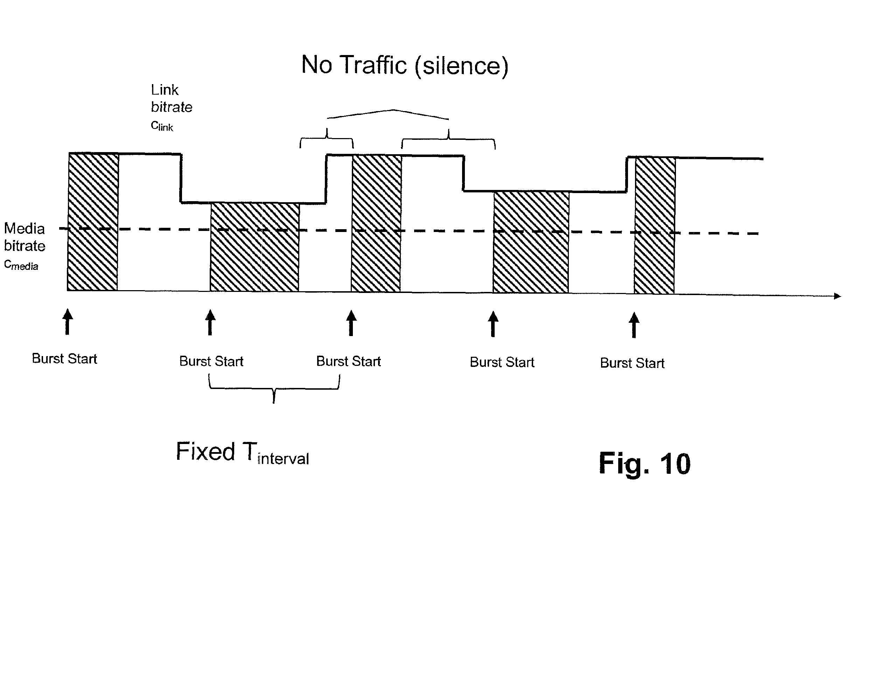

According to one implementation of the technique presented herein, it is suggested that the media client 40 is permitted to enter an RRC state of lower power consumption during the idle period following a specific media burst. It has now been found that entering an RRC state of lower power consumption may sometimes be difficult to achieve when releasing the media bursts at a fixed periodicity (i.e., at a fixed window period duration Tᵢₙₜₑᵣᵥₐₗ) as illustrated in Fig. 10.

As will be appreciated, a fixed duration of Tᵢₙₜₑᵣᵥₐₗ leads to variable download durations for media bursts in case the link bitrate cₗᵢₙₖ varies. The result is that the idle period duration Tₛᵢₗₑₙₜ also varies as illustrated in Fig. 10. Depending on the link bitrate variations, the idle period duration Tₛᵢₗₑₙₜ may often become too short to justify a transition to an RRC state of lower power consumption. It would thus be advantageous to adjust the media data volume B of an individual media burst dependent on the fill level of the media client 40 such that the idle period following the media burst will not fall below a duration defined by one or more of the RRC inactivity timers. In this regard, various approaches may be initiated as will now be discussed in more detail.

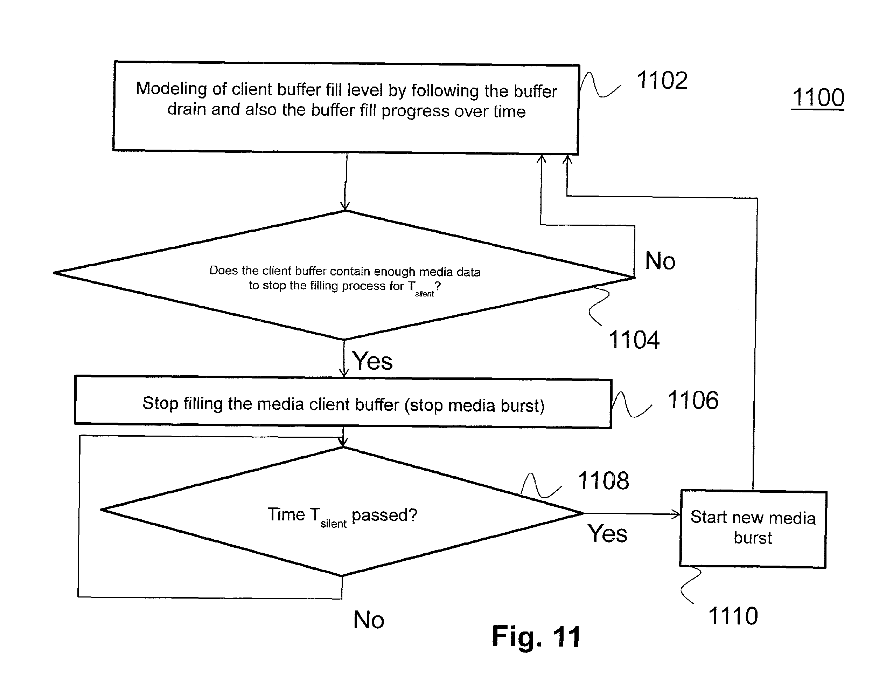

Fig. 11 illustrates a flow diagram 1100 representative of a method embodiment that ensures that the idle periods will have constant durations Tₛᵢₗₑₙₜ of, for example, 20s. It will be appreciated that the duration of Tₛᵢₗₑₙₜ may vary as needed. As a consequence of the fixed idle period duration Tₛᵢₗₑₙₜ, the aggregated durations of the media burst T_{burst} and of the idle period Tₛᵢₗₑₙₜ (i.e., the window duration Tᵢₙₜₑᵣᵥₐₗ) will generally vary over time. Those variations will, for example, be the result of a changing link bitrate cₗᵢₙₖ.

The method embodiment illustrated in Fig. 11 may generally be practised by the network node 20 illustrated in Fig. 2A and, optionally, in connection with the transmission scenarios illustrated in Figs. 5 and 7. The method embodiment of Fig. 11 is particularly beneficial from the point of view of the media client 40 illustrated in Fig. 8 in connection with implementing the power saving measures shown in Fig. 9. Accordingly, the method embodiment could also be practised by the proxy node 20 of Fig. 8.

As shown in Fig. 11, the network node 20 continuously maintains a model of the fill level of the client-side media buffer 44 (step 1102). The fill level is modelled by following the buffer draining process (e.g., in terms of media samples fetched by the media decoder 46) and also the buffer filling process (e.g., in terms of transmitted TCP samples or in terms of transmitted data in byte or in terms of transmitted "playout time").

It is assumed that in step 1102 the burst release controller 26 of the burst generator 22 illustrated in Fig. 2 has already started releasing a media burst, which means that the media buffer 44 of the media client 40 is gradually filling. Step 1102 will generally be performed by the estimation function 28. This means that the burst release controller 26 may continuously inform the estimation function 28 about the media data volume already transmitted in the ongoing burst.

In step 1104 it is checked if the media buffer 44 of the media client 40 presently (i.e., during the ongoing burst) contains enough media data to stop the buffer filling process for a predefined idle period duration Tₛᵢₗₑₙₜ. This check may be performed based on the current fill level of the media buffer 44 (as determined in step 1102), the estimated buffer draining rate by the media decoder 46 and the scheduled idle period duration Tₛᵢₗₑₙₜ·

If it is determined in step 1104 that the media buffer 44 of the media client 40 does not yet contain enough media data, step 1104 loops back to step 1102. Otherwise, the estimation function 28 informs the burst release controller 26 of the burst generator 22 in step 1106 that the ongoing burst (e.g., the ongoing TCP segment transmissions) can be terminated.

From step 1106 the method proceeds to step 1108. In step 1108 the idleness timer 30, which has been set to a fixed idle period duration Tₛᵢₗₑₙₜ, is started. Once the idleness timer has expired, the method proceeds to step 1110. In step 1110, the burst release controller 26 starts releasing a new burst, and the method loops back to step 1102.

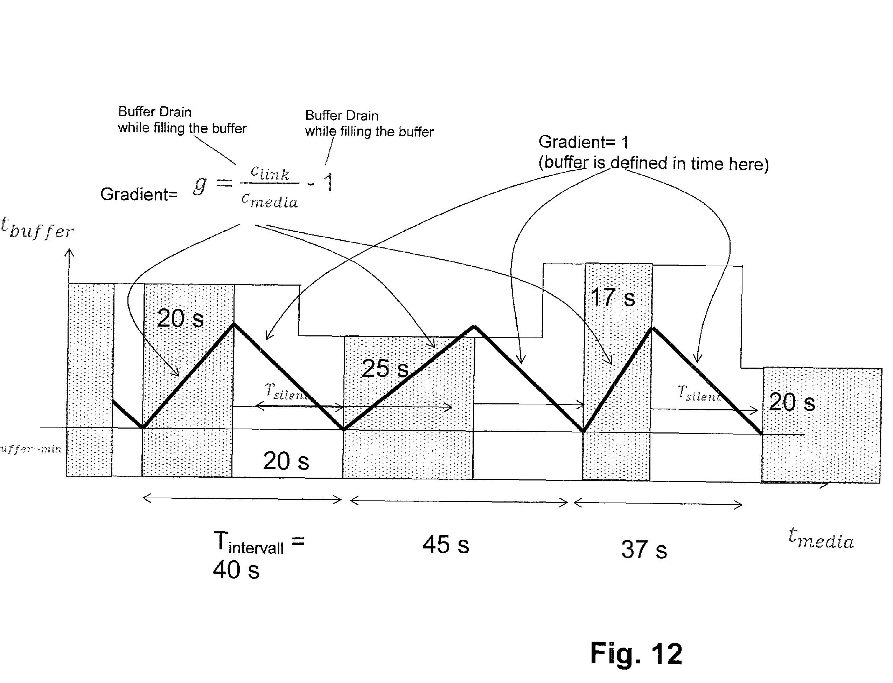

Fig. 12 is a timing scenario similar to Fig. 6 that shows the model of the media buffer 44 of the media client 40 as maintained by the estimation function 28 during the process illustrated in Fig. 11. As becomes apparent from Fig. 12, a fixed idle period duration Tₛᵢₗₑₙₜ of (in the present embodiment) 20 s can be guaranteed. On the other hand, the burst duration T_{burst} will vary depending on the available link bitrate cₗᵢₙₖ. As becomes apparent, a higher link bitrate cₗᵢₙₖ leads to a shorter burst duration, and vice versa. Consequently, the window duration Tᵢₙₜₑᵣᵥₐₗ will typically vary from one window to the next window as also shown in Fig. 12.

As becomes apparent from Fig. 12, the buffer filling rate generally depends on the ratio between the link bitrate cₗᵢₙₖ and the media bitrate c_{media}. It can further be seen that the media decoder 46 is continuously draining the media buffer 44. In Fig. 12, T_{buffer-min} is the minimum buffer level (a safety margin) at which the media buffer 44 approaches a buffer underrun and the rendering function 48 will stop playback. This means that the media buffer 44 should be filled at least to a level that exceeds T_{buffer-min} by an amount of media data that permits the rendering function 48 to operate during the idle period duration Tₛᵢₗₑₙₜ without reaching T_{buffer-min}.

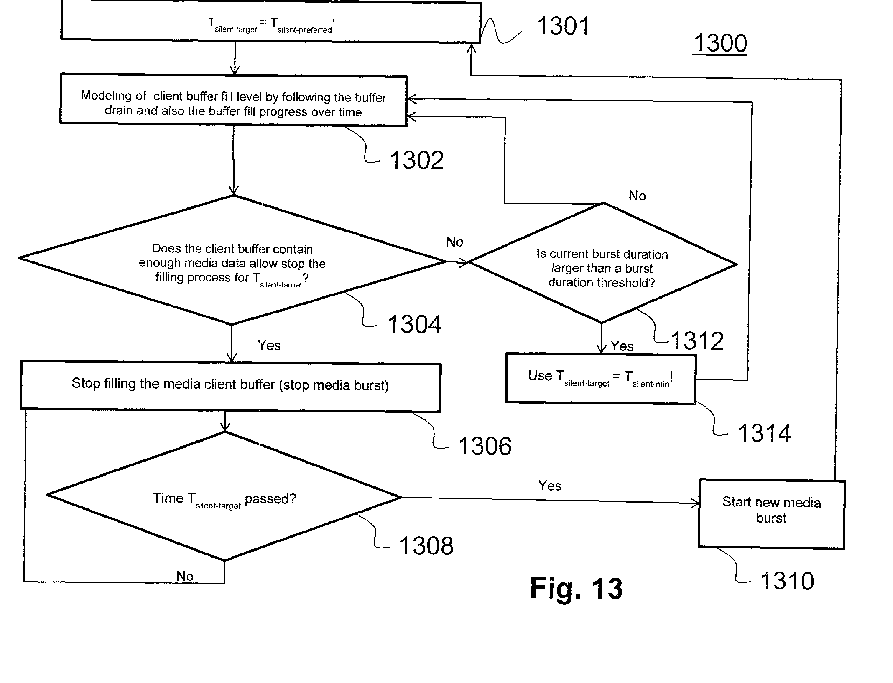

Fig. 13 illustrates a flow diagram 1300 representative of another method embodiment. The method embodiment of Fig. 13 is based on the method embodiment of Fig. 11 and prevents that a burst duration T_{burst} becomes excessively long. As soon as the duration of the burst exceeds a predefined threshold (which means that it would take overly long to transmit the burst), a target duration T_{silent-target} of the idle period is reduced to a minimum duration Tₛᵢₗₑₙₜ₋ₘᵢₙ.

With reference to Fig. 13, steps 1302 to 1310 essentially correspond to steps 1102 to 1110 described with reference to Fig. 11. For this reason, only the major differences will be described here.

In an initial step 1301, a target idle period duration T_{silent-target} is set to a preferred value T_{silent-preferred}· As long as the media client buffer is not yet sufficiently filled to guarantee an idle period of T_{silent-target}, it is additionally checked in step 1112 if the current burst duration is longer than a predefined burst duration threshold. In step 1312, the burst duration may be monitored in terms of one or more parameters (e.g., duration in time, transmitted data in byte number of TCP segments transported, and so on). If it is determined in step 1312 that the burst duration threshold is exceeded, the target idle period duration T_{silent-target} is set to a lower value Tₛᵢₗₑₙₜ₋ₘᵢₙ in step 1314. From step 1314 the method proceeds to step 1302.

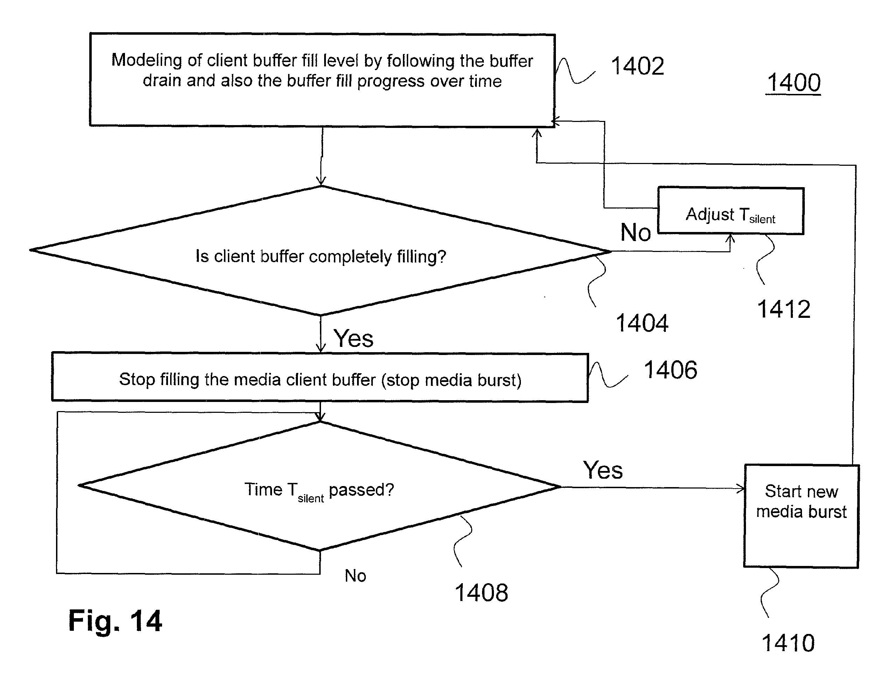

Fig. 14 illustrates a still further flow diagram 1400 representative of another method embodiment. Steps 1402, 1406, 1408 and 1410 essentially correspond to steps 1102, 1106, 1108 and 1110 of Fig. 11. Only the major differences will be described here.

According to the method embodiment illustrated in Fig. 14, media bursts are sent until the network node 20 determines in step 1404 that the media buffer 44 of the media client 40 has completely been filled. In such a case the media client 40 has set the TCP window size to zero to stop the transmission of any further media data. This approach is also referred to as TCP flow control.

Upon starting a media burst in the scenario of Fig. 14, a timer is started to measure the time until the network node 20 determines that the TCP window size has been set to zero. When the network node 20 detects that the TCP window size has been set to zero by the media client 40, it proceeds from step 1104 to step 1406. Otherwise, that means as long as the TCP window size is above zero, the buffer filling time is continued to be measured in step 1412 and the method proceeds to step 1402.

When the network node 20 stops filling the media client buffer 44 in step 1406, also the timer is stopped. Based on the value of the timer and, optionally, further information pertaining to the buffer filling process (e.g., the link bitrate cₗᵢₙₖ) and the buffer draining process (e.g., the media bitrate c_{media}), the buffer fill level may be estimated by the estimation function 28. Based on this estimation, a suitable idle period duration Tₛᵢₗₑₙₜ can be selected for the subsequent step 1408. This selection may be performed such that a buffer underrun at the media client 40 is prevented. Thus, the idle period may be adjusted based on the fill level of the media client buffer 44 upon execution of step 1406. In one implementation, the currently feasible idle period duration Tₛᵢₗₑₙₜ is directly calculated and continuously adjusted in step 1412 for later use in step 1408.

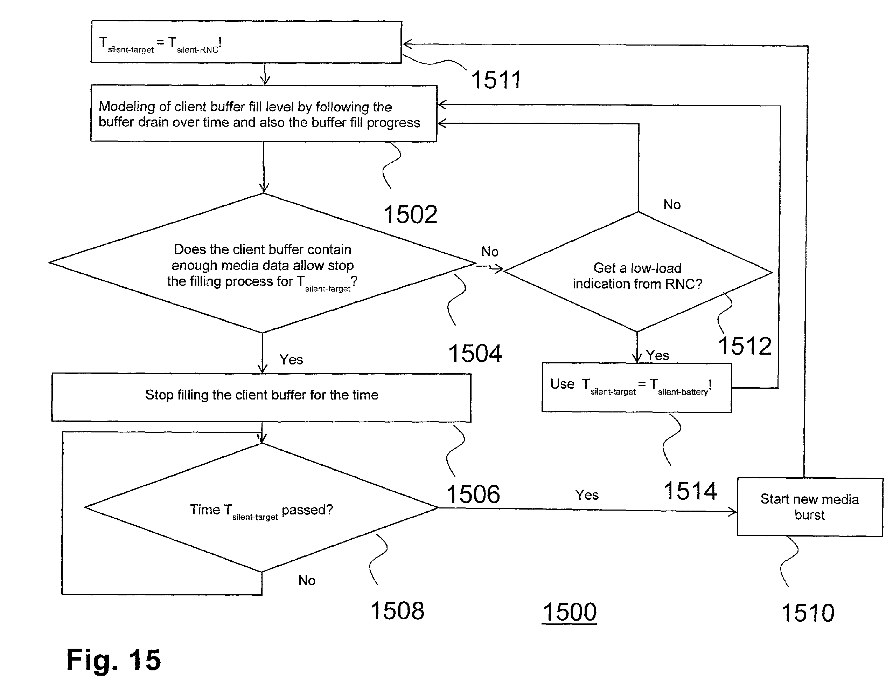

Fig. 15 illustrates a flow diagram 1500 of a still further method embodiment in which the idle period duration and, optionally, the media data volume of a currently generated media burst are adjusted responsive to control message signalling from the access network 100 of Fig. 1B. The method embodiment of Fig. 15 may be practised in connection with one or both of the specific network setup illustrated in Fig. 8 and any of the further method embodiments of Figs. 11, 13 and 14.

In the embodiment of Fig. 15 two different idle period durations are defined. A first idle period duration T_{silent-RNC} is a silent duration that is beneficial from the perspective of the access network 100 in terms of RNC load. As will be appreciated, the burst size (i.e., the target media data volume implemented by the burst release controller 26) has implications on access network load, and in particular on the load of the RNC 80 of Fig. 8.

A longer burst size is accompanied by more RNC savings. For example, in certain configurations there may be a 50% saving in RNC load with a burst duration T_{burst} of 60 s compared to a burst duration T_{burst} of 15 s and lower. These savings can be attributed to the fact that longer burst durations are associated with longer but less idle periods (and vice versa) to transmit, for example, a given media file, as more media data is transmitted per media burst. As such, less RRC signalling over the signalling channels between the RNC 80 and the media clients 40 in connection with an RRC-based power saving scheme (e.g., as illustrated in Fig. 9) could be obtained.

Of course, the highest RNC "gain" would be obtained if the media data were transmitted in a single chunk (i.e., if no bursty media data transmission scheme was applied). On the other hand, as explained above, sending the media data in a non-bursty transmission scheme would be negative taking into account the typical abandonment behaviour of users and might thus lead to a waste of transmission bandwidth. As such, "pacing" and the associated transmission of the media data in media bursts is suggested also in the embodiment of Fig. 15.

In addition to the two constraints of transmitting media data taking into account user abandonment behaviour ("pacing") and RAN/RNC load, there is a third constraint, namely optimizing power consumption of the media clients 40 (e.g., increasing battery "lifetime"). To this end, the method embodiment illustrated in Fig. 15 defines a second idle period duration, T_{silent-battery}·

T_{silent-battery} is substantially shorter (e.g., by a factor of approximately 1.5 to 3) than T_{silent-RNC}. As will be appreciated, a shorter duration of the idle period permits to decrease the media data volume transported in the associated media burst (but prevent a buffer underrun of the media client 40). Decreasing the media data volume per media burst in turn means that a given media file is transmitted in more bursts, and thus more idle periods. More idle periods imply more RRC signalling in case a power saving scheme based on RRC inactivity timers is implemented.

The comparatively longer idle period duration T_{silent-RNC} is advantageous in view of decreasing access network load. On the other hand, the comparatively shorter silent period duration T_{silent-battery} is advantageous from the perspective of saving transmission bandwidth in view of typical user abandonment behaviour (i.e., "pacing"), while at the same time maintaining a bursty media data transmission scheme with idle period durations T_{silent-battery} that permit RRC inactivity timers of media clients 40 to expire.

In general, increasing the media data volume per burst (and thus the burst duration T_{burst}) in case of a high access network load will make pacing less "precise" (as the media client 40 will discard more media data when switching to new content). On the other hand, decreasing the media data volume per burst (and thus the burst duration T_{burst}), if permitted by access network load, makes pacing more "precise" (i.e., the media clients 40 will discard less media data when switching to new content).

The method embodiment of Fig. 15 permits the RNC 80 (and, in general, the access network 100) to influence the idle period duration via control messaging based on its current load status and, indirectly, to control abandonment losses. Steps 1502, 1504, 1506, 1508 and 1510 generally correspond steps 1102, 1104, 1106, 1108 and 1110, respectively, as described above with reference to Fig. 11. For this reason those steps will not be explained in more detail below.

In an initial step 1511 a target silent duration period T_{silent-target} is set to the silent period duration T_{silent-RNC} that is optimal from the perspective of access network load. It will be appreciated that in other embodiments the initial silent duration T_{silent-target} could be set in step 1511 to the shorter idle period duration T_{silent-battery} that is more efficient from the perspective of avoiding a waste of transmission bandwidth.

From step 1511 the method proceeds to step 1504. In case it is determined in step 1504 that the media buffer 44 of the media client 40 does not contain enough media data to terminate the media buffer filling process, the method proceeds to step 1512.

In step 1512 it is determined if a dedicated control message is received from the access network 100 (see Figs. 1B, 2A and 2B). Specifically, it is checked in step 1512 whether the control message indicates a low-load status of the RNC 80. For example, such a low-load indication may be transmitted by the RNC 80 in case the RNC load is below 20% of its maximum load.

In case a low-load indication is received in step 1512, the network node 20 decreases the idle period duration in step 1514. Specifically, T_{silent-target} is set to T_{silent-battery}. This means that more idle periods will be scheduled to transmit a certain volume of media data. As such, the media client 40 will more often enter a power-efficient RRC state, which in turn increases the RRC signalling overhead between the RNC 80 and the media client 40 (and thus the RNC load).

From step 1514 the method proceeds to step 1502. In step 1502, for the presently generated media burst (if still possible), the new silent period duration T_{silent-battery} will be used, or the media burst is simply terminated (in case T_{silent-battery} is already exceeded). This means that the media data volume of the media burst will generally be decreased.

It should be noted that in case T_{silent-target} is set to T_{silent-battery} in step 1511, it may be checked in step 1512 whether a high-load indication is received from the RNC 80. A control message indicative of a high RNC load may, for example, be transmitted in case the RNC load is above 80%. Then, in step 1514, T_{silent-target} will be set to T_{silent-RNC}. This, in term, will lead to a less "precise" pacing compared to the situation in which the idle period duration is set to T_{silent-battery} as shown in Fig. 15 (as the media data volume of the currently generated media burst is increased).

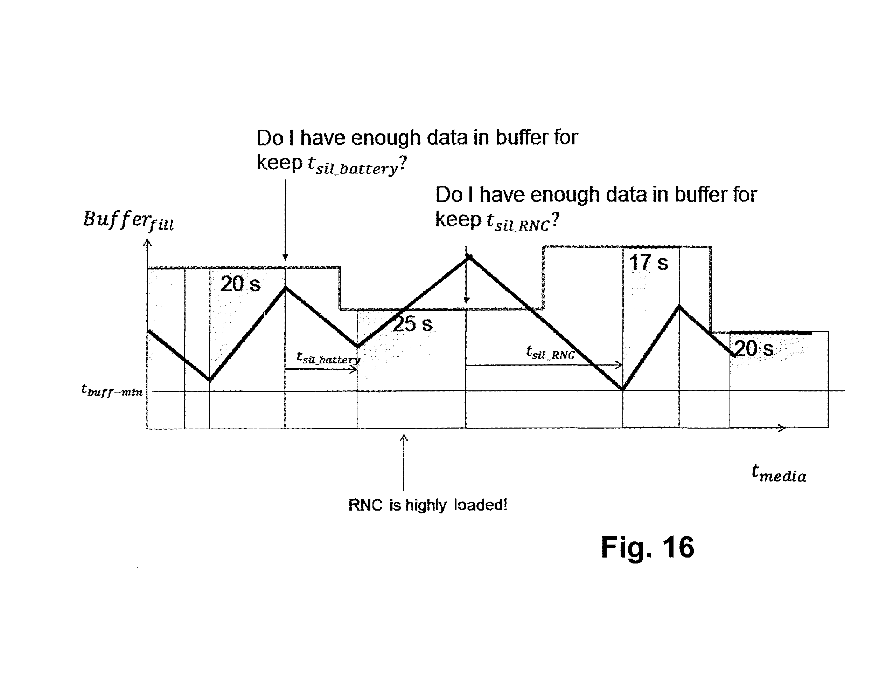

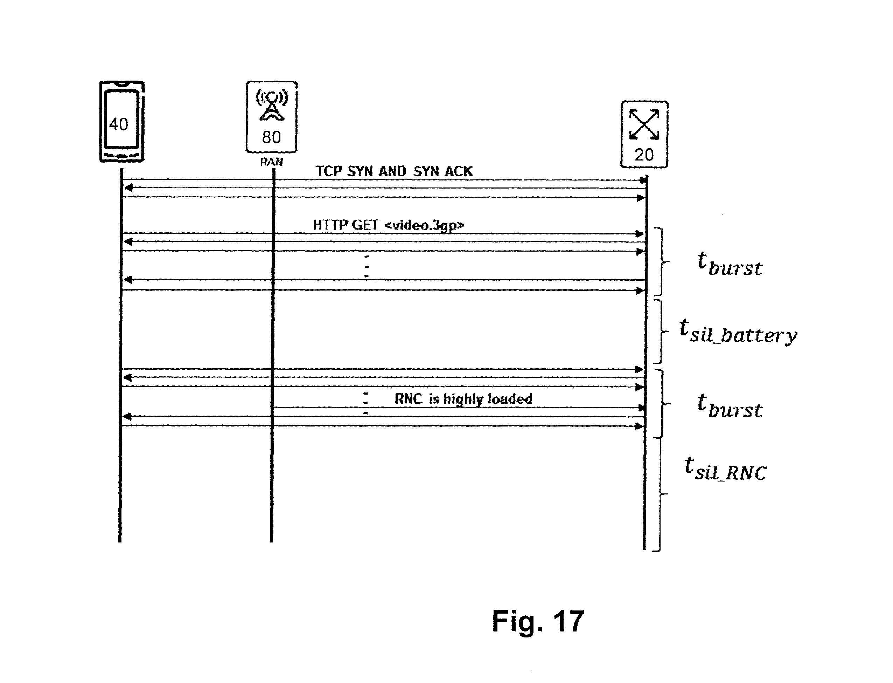

Fig. 16 illustrates a modelling of the fill level of the media buffer 44 as performed in step 1502 in connection with switching from T_{silent-battery} to T_{silent-RNC} when a high RNC load is reported. Moreover, Fig. 17 illustrates a signalling diagram similar to Fig. 7 including the transmission of a control message indicative of a high RNC load from the RNC 80 to the network node 20 and a subsequent transition from T_{silent-battery} to T_{silent-RNC}.

It should be noted that in other embodiments the method does not need to proceed from step 1510 to step 1511. Rather, a control message indicating a specific RNC load status may be applicable to multiple subsequent media bursts until a new control message is received from the access network 100. In such an implementation the specific nature of the control message may be evaluated in step 1512 (low-load or high-load indication?) and the setting of T_{silent-target} in step 1514 may be based on a result of this evaluation.

It should also be noted that in other embodiments more than two predefined idle period durations (T_{silent-RNC} and T_{silent-target} in Fig. 15) may be provided. Specifically, a an idle period duration may be selected at a higher granularity dependent on a specific access network load figure signalled via the control message. In another example, it may be possible to increase the RNC load by decreasing the idle period duration to T_{silent-battery}, but there may not be enough media data in the client buffer 44. In such a case two actions could be taken: either the client buffer 44 could be filled until enough media data is included therein, or the idle period duration is adjusted to a predefined shorter duration but still above T_{silent-battery}.

In one optional implementation, the access network node 80 may estimate the impact of a control message with a dedicated load indication by first determining the number of media data flows that make use of a bursty media data transmission scheme. If, for example, the access network node 80 determines that 20% of its media data flows to media clients 40 make use of a bursty transmission scheme, it can estimate the amount of load reduction when increasing the idle period duration for those 20% of the media data flows. The control message may then be sent dependent on the result of this estimation (e.g., either sooner or later).

Moreover, as already explained above, any adjustment of the idle period duration may be communicated from the adjusting network node 20 to the access network 100 (see, e.g., Fig. 1B). This adjustment may, for example, be taken into account by the access network 100 in its RRC scheme. In one implementation the setting RRC inactivity timers on the side of the media clients 40 could be adjusted by the access network 100 based on the adjusted idle period duration signalled by the network node 20.

In other embodiments, the access network 100 may receive dedicated EOB signalling from the network node 20 with respect to the media clients 40. Such EOB signalling can be used in connection with RRC signalling or load impact estimation as described above.

It is believed that many advantages of the present disclosure will be fully understood from the foregoing description, and it will be apparent that various changes may be made in the form, construction and arrangement of the exemplary aspects thereof without departing from the scope of the invention, or without sacrificing all of its advantages. Because the invention can be varied in many ways, it will be recognized that the invention should be limited by the scope of the claims that follow.

## Claims

1. A method of operating a network node (20) in a media distribution network (10) in which media data are transmitted via an access network (100) in media bursts to a media client (40), wherein a media burst is followed by an idle period in which no media data are transmitted, the method comprising:
receiving, from an access network (100), a control message; and
adjusting, responsive to the control message, at least one of a media data volume of a media burst and a duration of an idle period following the media burst.

2. The method of claim 1, wherein
the control message is indicative of a load status of the access network.

3. The method of claim 2, wherein
the control message is indicative of a load status that requires a decrease of access network load, and wherein at least one of the following two operations is initiated:
- the media data volume of the media burst is increased; and
- the duration of the idle period is extended.

4. The method of claim 2 or 3, wherein
when the control message is indicative of a load status that requires a decrease of access network load, the number of idle periods is decreased.

5. The method of claim 2, wherein,
the control message is indicative of a load status that permits an increase of access network load, and wherein at least one of the following two operations is initiated:
- the media data volume of the media burst is decreased; and
- the duration of the idle period is shortened.

6. The method of any of the preceding claims, wherein
a first bit rate at which the media burst is transmitted is on the average higher than a second bit rate at which the media client buffer (44) is drained.

7. A method of operating an access network node (80) in a media distribution network (10) in which media data are transmitted via an access network (100) in media bursts to a media client (40), wherein a media burst is followed by an idle period in which no media data are transmitted, the method comprising:
analysing a load status of the access network (100);
generating, based on the load status analysis, a control message for controlling adjustment of at least one of a media data volume of a media burst and a duration of an idle period following the media burst; and
transmitting the control message towards a network node (20) in charge of media burst generation.

8. The method of claim 7, wherein
analysing the load status comprises analysing at least one of:
- a number of client scheduling contexts maintained by the access network (100) or a component (80) thereof;
- available resources of the access network (100) or a component (80) thereof for one or more client signalling channels; and
- a number of media data flows to media clients (40) that support a media burst transmission scheme.

9. The method of claim 7 or 8, wherein
the control message is indicative of a load status that requires a decrease of access network load.

10. The method of claim 7 or 8, wherein
the control message is indicative of a load status that permits an increase of access network load.

11. A computer program product comprising program code portions for performing the method of any of the preceding claims when the computer program product is executed by a computing device.

12. The computer program product of claim 11, stored on a computer-readable recording medium.

13. A network node (20) for a media distribution network (10) in which media data are transmitted via an access network (100) in media bursts to a media client (40), wherein a media burst is followed by an idle period in which no media data are transmitted, the network node (20) comprising:
an interface (32) configured to receive, from the access network (100), a control message; and
a controller (34) configured to adjust, responsive to the control message, at least one of a media data volume of a media burst and a duration of an idle period following the media burst.

14. An access network node (80) for a media distribution network (10) in which media data are transmitted via an access network (100) in media bursts to a media client (40), wherein a media burst is followed by an idle period in which no media data are transmitted, the access network node (80) comprising:
a processor (84) configured to analyse a load status of the access network (100) and to generate, based on the load status analysis, a control message for controlling adjustment of at least one of a media data volume of a media burst and a duration of an idle period following the media burst;
an interface (82) configured to transmit the control message towards a network node (20) in charge of media burst generation.

15. The access network node of claim 14,
configured as a Radio Network Controller, RNC.

16. An access network (100), comprising the access network node (80) of claim 14 or 15.

## Patentansprüche

1. Verfahren zum Betreiben eines Netzwerkknotens (20) in einem Medienverbreitungsnetzwerk (10), in welchem Mediendaten über ein Zugangsnetzwerk (100) in Medienbursts an einen Medienclient (40) gesendet werden, wobei ein Medienburst von einer Ruhezeit gefolgt ist, in welcher keine Mediendaten gesendet werden, wobei das Verfahren umfasst:
Empfangen, von einem Zugangsnetzwerk (100), einer Steuernachricht; und
Einstellen, als Antwort auf die Steuernachricht, zumindest eines von einem Mediendatenvolumen eines Medienbursts und einer Dauer einer Ruhezeit, die auf den Medienburst folgt.

2. Verfahren nach Anspruch 1, wobei
die Steuernachricht einen Laststatus des Zugangsnetzwerks anzeigt.

3. Verfahren nach Anspruch 2, wobei
die Steuernachricht einen Laststatus anzeigt, der eine Verringerung einer Zugangsnetzwerklast erfordert, und wobei zumindest eine der folgenden zwei Operationen eingeleitet wird:
- das Mediendatenvolumen des Medienbursts wird erhöht; und
- die Dauer der Ruhezeit wird verlängert.

4. Verfahren nach Anspruch 2 oder 3, wobei wenn die Steuernachricht einen Laststatus anzeigt, der eine Verringerung einer Zugangsnetzwerklast erfordert, die Anzahl von Ruhezeiten verringert wird.

5. Verfahren nach Anspruch 2, wobei
die Steuernachricht einen Laststatus anzeigt, der eine Zunahme einer Zugangsnetzwerklast erlaubt, und wobei eine der folgenden zwei Operationen eingeleitet wird:
- das Mediendatenvolumen des Medienbursts wird verringert; und
- die Dauer der Ruhezeit wird verkürzt.

6. Verfahren nach einem der vorangehenden Ansprüche, wobei
eine erste Bitrate, bei welcher der Medienburst gesendet wird, im Durchschnitt höher ist als eine zweite Bitrate, bei welcher der Medienclient-Zwischenspeicher (44) entleert wird.

7. Verfahren zum Betreiben eines Netzwerkknotens (80) in einem Medienverbreitungsnetzwerk (10), in welchem Mediendaten über ein Zugangsnetzwerk (100) in Medienbursts an einen Medienclient (40) gesendet werden, wobei ein Medienburst von einer Ruhezeit gefolgt ist, in welcher keine Mediendaten gesendet werden, wobei das Verfahren umfasst:
Analysieren eines Laststatus des Zugangsnetzwerks (100);
Generieren, basierend auf der Laststatusanalyse, einer Steuernachricht zum Steuern der Einstellung zumindest eines von einem Mediendatenvolumen eines Medienbursts und einer Dauer einer Ruhezeit, die auf den Medienburst folgt; und
Senden der Steuernachricht zu einem Netzwerkknoten (20), der für ein Generieren eines Medienbursts zuständig ist.

8. Verfahren nach Anspruch 7, wobei
das Analysieren des Laststatus ein Analysieren von zumindest einem der folgenden umfasst:
- einer Anzahl von Client-Ablaufplanungskontexten, die von dem Zugangsnetzwerk (100) oder einer Komponente (80) desselben geführt werden;
- verfügbarer Ressourcen des Zugangsnetzwerks (100) oder einer Komponente (80) desselben für einen oder mehrere Client-Signalisierungskanäle; und
- einer Anzahl von Mediendatenströmen zu Medienclients (40), die ein Medienburst-Sendeschema unterstützen.

9. Verfahren nach Anspruch 7 oder 8, wobei
die Steuernachricht einen Laststatus anzeigt, der eine Verringerung einer Zugangsnetzwerklast erfordert.

10. Verfahren nach Anspruch 7 oder 8, wobei
die Steuernachricht einen Laststatus anzeigt, der eine Zunahme einer Zugangsnetzwerklast erlaubt.

11. Rechnerprogrammprodukt, umfassend Programmcodeabschnitte zum Durchführen des Verfahrens nach einem der vorangehenden Ansprüche, wenn das Rechnerprogrammprodukt durch eine Rechenvorrichtung ausgeführt ist.

12. Rechnerprogrammprodukt nach Anspruch 11, gespeichert auf einem rechnerlesbaren Aufzeichnungsmedium.

13. Netzwerkknoten (20) für ein Medienverbreitungsnetzwerk (10), in welchem Mediendaten über ein Zugangsnetzwerk (100) in Medienbursts an einen Medienclient (40) gesendet werden, wobei ein Medienburst von einer Ruhezeit gefolgt ist, in welcher keine Mediendaten gesendet werden, wobei der Netzwerkknoten (20) umfasst:
eine Schnittstelle (32), die zum Empfangen einer Steuernachricht vom Zugangsnetzwerk (100) konfiguriert ist; und
eine Steuerung (34), die zum Einstellen, als Antwort auf die Steuernachricht, zumindest eines von einem Mediendatenvolumen eines Medienbursts und einer Dauer einer Ruhezeit, die auf den Medienburst folgt, konfiguriert ist.

14. Zugangsnetzwerkknoten (80) für ein Medienverbreitungsnetzwerk (10), in welchem Mediendaten über ein Zugangsnetzwerk (100) in Medienbursts an einen Medienclient (40) gesendet werden, wobei ein Medienburst von einer Ruhezeit gefolgt ist, in welcher keine Mediendaten gesendet werden, wobei der Zugangsnetzwerkknoten (80) umfasst:
einen Prozessor (84), der zum Analysieren eines Laststatus des Zugangsnetzwerks (100) und zum Generieren, basierend auf der Laststatusanalyse, einer Steuernachricht zum Steuern der Einstellung zumindest eines von einem Mediendatenvolumen eines Medienbursts und einer Dauer einer Ruhezeit, die auf den Medienburst folgt, konfiguriert ist;
eine Schnittstelle (82), die zum Senden der Steuernachricht zu einem Netzwerkknoten (20), der für ein Generieren eines Medienbursts zuständig ist, konfiguriert ist.

15. Zugangsnetzwerkknoten nach Anspruch 14, der als Radio Network Controller, RBC, konfiguriert ist.

16. Zugangsnetzwerk (100), umfassend den Zugangsnetzwerkknoten (80) nach Anspruch 14 oder 15.

## Revendications

1. Procédé de fonctionnement d'un noeud de réseau (20) dans un réseau de distribution média (10) dans lequel des donnés médias sont transmises via un réseau d'accès (100) en rafales média vers un client média (40), dans lequel une rafale média est suivie par une période de repos pendant laquelle aucunes données média ne sont transmises, le procédé comprenant de :
recevoir, depuis un réseau d'accès (100), un message de commande ; et
ajuster, en réponse au message de commande, au moins un d'un volume de donnés média d'une rafale média et une durée d'une période de repos suivant la rafale média.

2. Procédé selon la revendication 1, dans lequel
le message de commande indique un statut de charge du réseau d'accès.

3. Procédé selon la revendication 2, dans lequel
le message de commande indique un statut de charge qui nécessite une diminution d'une charge de réseau d'accès et dans lequel au moins une des opérations suivantes est amorcée:
- le volume de donnés média de la rafale média est augmenté ; et
- la durée de la période de repos est étendue.

4. Procédé selon la revendication 2 ou 3, dans lequel lorsque le message de commande indique un statut de charge qui nécessite une diminution d'une charge de réseau d'accès, le nombre de périodes de repos est diminué.

5. Procédé selon la revendication 2, dans lequel
le message de commande indique un statut de charge qui permet une augmentation de la charge de réseau d'accès et dans lequel au moins une des deux opérations suivantes est amorcés :
- le volume de donnés média de la rafale média est diminué ; et
- la durée de la période de repos est raccourcie.

6. Procédé selon une quelconque des revendications précédentes, dans lequel
un premier débit auquel la rafale média est transmise est en moyenne supérieur à un second débit auquel la mémoire tampon de client média (44) est drainée.

7. Procédé de fonctionnement d'un noeud de réseau d'accès (80) dans un réseau de distribution média (10) dans lequel des donnés médias sont transmises via un réseau d'accès (100) en rafales média vers un client média (40), dans lequel une rafale média est suivie par une période de repos pendant laquelle aucunes données média ne sont transmises, le procédé comprenant de :
analyser un statut de charge de réseau d'accès (100) ;
générer, sur la base de l'analyse de statut de charge, un message de commande pour commander l'ajustement d'au moins un volume de donnés média d'une rafale média et une durée d'une période de repos suivant la rafale média ; et
transmettre le message de commande vers un noeud de réseau (20) en charge de la génération de rafales médias.

8. Procédé selon la revendication 7, dans lequel
analyser le statut de charge comprend d'analyser au moins un de :
- une pluralité de contextes de programmation client conservés par le réseau d'accès (100) ou un composant (80) de ce dernier ;
- des ressources disponibles du réseau d'accès(100) ou d'un composant (80) de ce dernier pour un ou plusieurs canaux de signalisation client, et
- une pluralité de flux de donnés média vers les clients média (40) qui prennent en charge un mécanisme de transmission de rafales média.

9. Procédé selon la revendication 7 ou 8, dans lequel
le message de commande indique un statut de charge qui nécessite une diminution de charge de réseau d'accès.

10. Procédé selon la revendication 7 ou 8, dans lequel
le message de commande indique un statut de charge qui nécessite une augmentation de charge de réseau d'accès.

11. Produit de programme informatique comprenant des portions de code de programme pour mettre en oeuvre le procédé selon une quelconque des revendications précédentes lorsque le produit de programme informatique est exécuté par un dispositif informatique.

12. Produit de programme informatique selon la revendication 11, mémorisé sur un support d'enregistrement lisible par ordinateur.

13. Noeud de réseau (20) dans un réseau de distribution média (10) dans lequel des donnés médias sont transmises via un réseau d'accès (100) en rafales média vers un client média (40), dans lequel une rafale média est suivie par une période de repos pendant laquelle aucunes données média ne sont transmises, le noeud de réseau (20) comprenant:
une interface (32) configurée pour recevoir, depuis le réseau d'accès (100), un message de commande ; et
un contrôleur (34) configuré pour ajuster, en réponse au message de commande, au moins un d'un volume de donnés média d'une rafale média et une durée d'une période de repos suivant la rafale média.

14. Noeud de réseau d'accès (80) dans un réseau de distribution média (10) dans lequel des donnés médias sont transmises via un réseau d'accès (100) en rafales média vers un client média (40), dans lequel une rafale média est suivie par une période de repos pendant laquelle aucunes données média ne sont transmises, le noeud de réseau d'accès (80) comprenant:
un processeur (84) configuré pour analyser un statut de charge de réseau d'accès (100) et générer, sur la base de l'analyse de statut de charge, un message de commande pour commander l'ajustement d'au moins un volume de donnés média d'une rafale média et une durée d'une période de repos suivant la rafale média ;
une interface (82) configurée pour transmettre le message de commande vers un noeud de réseau (20) en charge de la génération de rafales médias.

15. Noeud de réseau d'accès selon la revendication 14, configuré comme un contrôleur de réseau radio, RNC.

16. Réseau d'accès (100) comprenant le noeud de réseau d'accès (80) selon la revendication 14 ou 15.
